# EUROPEAN PATENT SPECIFICATION

(11) **EP 4 057 668 B1**
(45) Date of publication and mention of the grant of the patent: **10.12.2025**
(21) Application number: 20896489.0
(22) Date of filing: 12.10.2020
(51) Int. Cl.: H04W 24/02, H04W 88/08, H04W 88/18

(54) **NETWORK MANAGEMENT METHOD, DEVICE, AND SYSTEM**
NETZWERKVERWALTUNGSVERFAHREN, -VORRICHTUNG UND -SYSTEM
PROCÉDÉ, DISPOSITIF ET SYSTÈME DE GESTION DE RÉSEAU

(30) Priority: 05.12.2019 CN 201911237689
(43) Date of publication of application: 14.09.2022
(73) Proprietor: Huawei Technologies Co., Ltd., Shenzhen, Guangdong 518129 (CN)
(72) Inventor: WANG, Fengbao, Shenzhen, Guangdong 518129 (CN)
(74) Representative: Epping - Hermann - Fischer
(86) International application number: PCT/CN2020/120344
(87) International publication number: WO 2021/109711

(56) References cited:
- EP-A1- 3 432 629
- CN-A- 104 540 234
- CN-A- 105 009 515
- CN-A- 106 714 184
- CN-A- 107 113 795
- HUAWEI: "Add example of utilization intent Driven MnS for factory add-on network provisioning example", vol. SA WG5, no. Sophia Antipolis, France; 20191014 - 20191018, 4 October 2019 (2019-10-04), XP051811454, Retrieved from the Internet <URL:https://ftp.3gpp.org/tsg_sa/WG5_TM/TSGS5_127/Docs/S5-196360.zip S5-196360 pCR 28.812 Add an example of utilization intent Driven MnS for factory private network.doc> [retrieved on 20191004]
- HUAWEI: "Add a potential solution for area based radio network deployment", vol. SA WG5, no. Zhuhai, China; 20191118 - 20191122, 22 November 2019 (2019-11-22), XP051827972, Retrieved from the Internet <URL:https://ftp.3gpp.org/tsg_sa/WG5_TM/TSGS5_128/Docs/S5-197612.zip S5-197612 pCR 28.812 Add potential solution for area based radio network deployment.doc> [retrieved on 20191122]
- ANONYMOUS: "3rd Generation Partnership Project; Technical Specification Group Services and System Aspects; Telecommunication management; Study on scenarios for Intent driven management services for mobile networks (Release 16)", vol. SA WG5, no. V0.8.0, 6 November 2019 (2019-11-06), pages 1 - 41, XP051840553, Retrieved from the Internet <URL:ftp://ftp.3gpp.org/Specs/archive/28_series/28.812/28812-080.zip 28812-080.doc> [retrieved on 20191106]
- "AI in Network. Use Cases in China", GSM ASSOCIATION, GSM ASSOCIATION, GSMA FLOOR2 THE WALBROOK BUILDING 25 WALLBROOK LONDON, UK, 23 October 2019 (2019-10-23), XP040720867

## Description

This disclosure claims priority to Chinese Patent Application No. 201911237689.9, filed with the China National Intellectual Property Administration on December 5, 2019 and entitled "NETWORK MANAGEMENT METHOD, DEVICE, AND SYSTEM".

### TECHNICAL FIELD

This disclosure relates to the field of communication technologies, and specifically, to network management.

### BACKGROUND

Currently, wireless network management is usually management based on cells. One network management infrastructure system manages tens of thousands of cells. Because a cell has a large quantity of random "dynamic characteristics", such as a large quantity of performance indicators of the cell, change trends of the performance indicators, and dynamic changes of characteristic resources used in the cell, costs of managing the dynamic characteristics are very high. In addition, due to emergence of a single frequency network (single frequency network, SFN) technology, radio frequency transceiver antennas that form a cell are dynamically adjusted based on traffic characteristics in a coverage area. That is, network adjustment based on a service level agreement (SLA) may require cell combination or splitting. As a result, a cell is not a minimum unit of SLA-based management, leading to more complex network management.

Further, more RATs will be introduced for wireless network management, making a network more complex. The use of high-frequency spectrums decreases a cell coverage area, increases a cell density per unit geographical area, further increases cell-based management costs, and is unfavorable to automated network management.

HUAWEI: "Add example of utilization intent Driven MnS for factory add-on network provisioning example", 3GPP DRAFT; S5-196360, vol. SA WG5; 20191014 - 20191018 4 October 2019 (2019-10-04) takes area-based factory add-on network provisioning as an example, combines Intent-CSP and Intent-NOP, and provides a multi-level Intent-driven management scenario.

HUAWEI: "Add a potential solution for area based radio network deployment", 3GPP DRAFT; S5-197612, vol. SA WG5, no. Zhuhai, China; 20191118 - 20191122 22 November 2019 (2019-11 -22) proposes a solution for area based radio network deployment.

"3rd Generation Partnership Project; Technical Specification Group Services and System Aspects; Telecommunication management; Study on scenarios for Intent driven management services for mobile networks (Release 16)", 3GPP STANDARD; TECHNICAL REPORT; 3GPP TR 28.812, vol. SA WG5, no. V0.8.0 6 November 2019 (2019-11-06), pages 1-41, describes subject to continuing work within the TSG and may change formal TSG approval. According to this document, should the TSG modify the contents of the present document, it will be re-released by the TSG with an identifying change of release date and an increase in version number.

"AI in Network. Use Cases in China", GSM ASSOCIATION, 23 October 2019 (2019-10-23) collects innovative use cases of AI in network planning and construction, maintenance and monitoring, configuration optimization, service quality assurance and improvement, energy saving and efficiency improvement, security protection, and operational services. It is expected that this report shares experience, promotes cooperation, and encourages industry partners to gradually clarify the objectives, architecture, and development phases of intelligent autonomous networks and focus on technical difficulties.

### SUMMARY

Embodiments of this disclosure provide a network management method, used for automated network management, to implement autonomous network driving. Embodiments of this disclosure further provide a corresponding device and system.

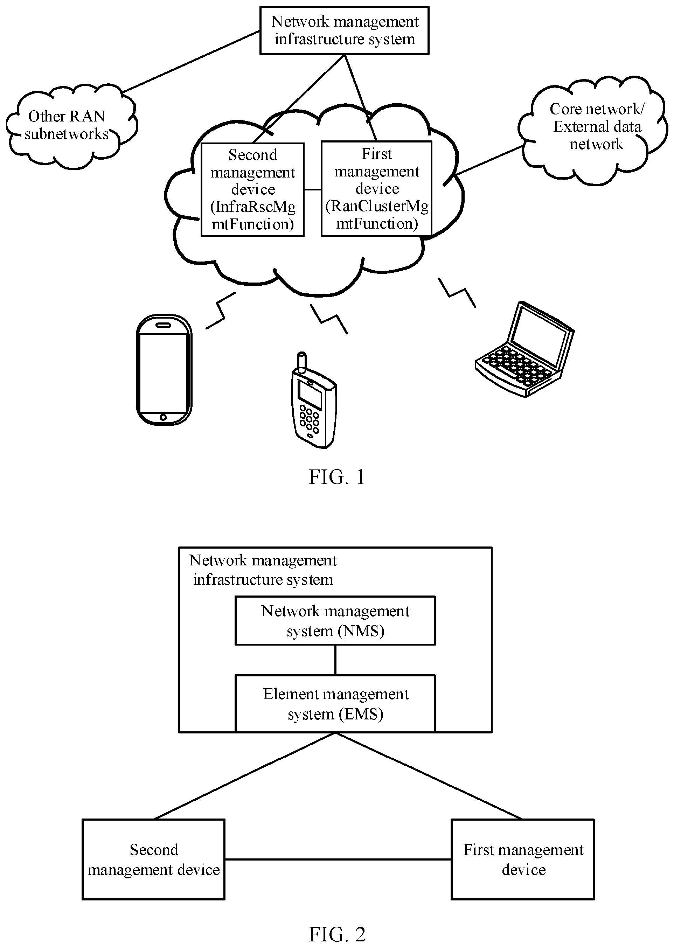

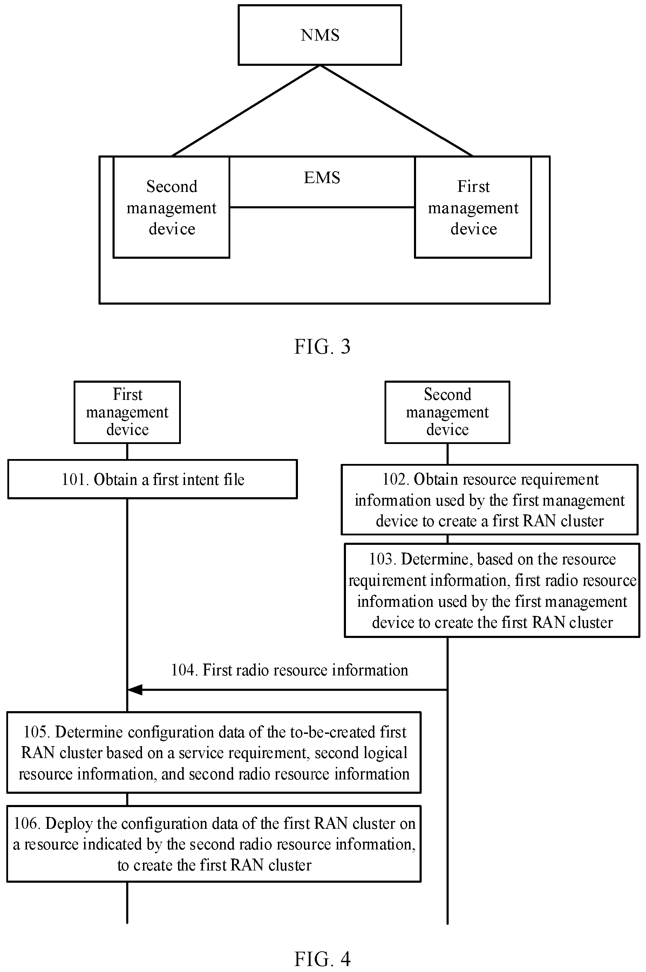

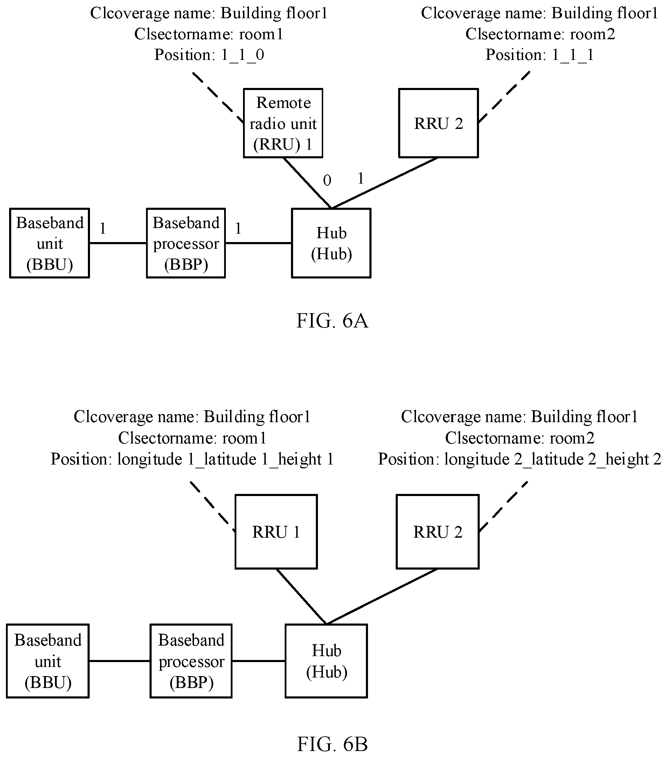

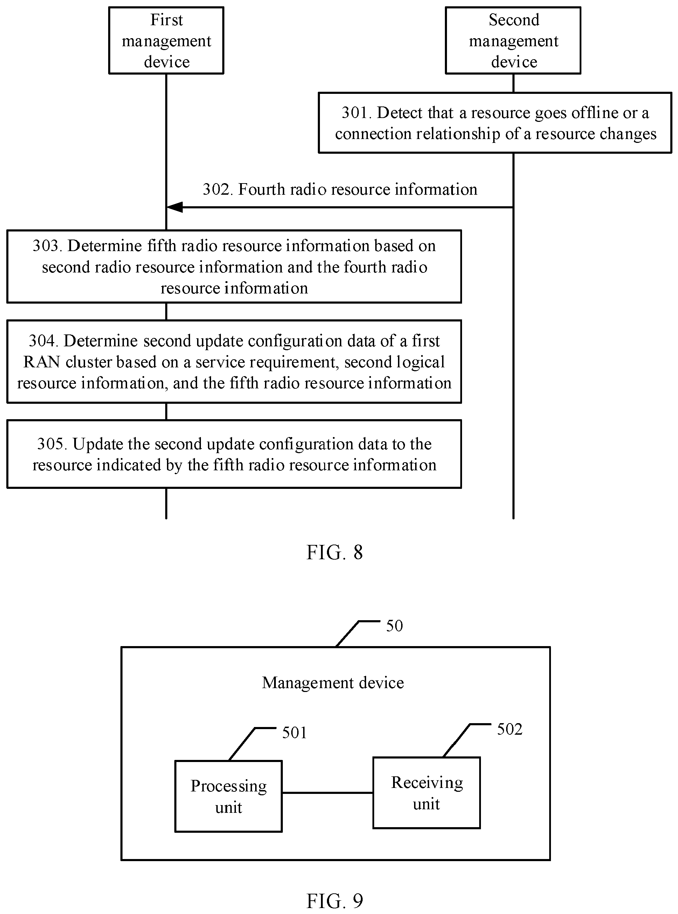

The present invention is set out by the set of appended claims. In particular, the present invention is best understood with reference to Figures 4, 7, 9 and 10 for the independent claims and with reference to Figures 6A-6D and 8 for the dependent claims. Parts of the description with reference to Figures 1-3, 5 and 11 are disclosed for a better understanding of the invention.

A first aspect of this disclosure provides a network management method, including: A first management device obtains a first intent file, where the first intent file includes a service requirement for creating a first RAN cluster and first logical resource information; the first management device receives first radio resource information sent by a second management device; the first management device determines configuration data of the to-be-created first RAN cluster based on the service requirement, second logical resource information, and second radio resource information, where the second logical resource information is included in the first logical resource information, and the second radio resource information is included in the first radio resource information, and the first management device deploys the configuration data of the first RAN cluster on a resource indicated by the second radio resource information, to create the first RAN cluster.

In the first aspect, the first management device may also be referred to as a RanClusterMgmtFunction (RanClusterMgmtFunction) device, and the second management device may also be referred to as an InfraRscMgmtFunction (InfraRscMgmtFunction) device. The second management device provides an infrastructure resource for the first management device. The first management device may create a RAN cluster (RanCluster), update the RAN cluster, and the like based on the infrastructure resource provided by the second management device. The service requirement may include a service type, and quality of service (quality of service, QoS) parameters such as a bandwidth, a delay, and a packet loss rate. The first logical resource information includes an internet protocol (internet protocol, IP) address of a device, an evolved NodeB (evolved NodeB, eNB) identity (identity, ID), a 5G base station gNB ID, a cell identifier, and the like. The first logical resource information may be understood as a resource pool of these logical resources. The second logical resource information is the first logical resource information, or is a subset of the first logical resource information. The first radio resource information includes information about, for example, identifiers of, resources managed by the second management device, such as a baseband unit (baseband unit, BBU), a remote radio unit (remote Radio Unit, RRU), and a baseband processor (baseband processor, BBP). The second radio resource information is the first radio resource information, or is a subset of the first radio resource information. When creating the first RAN cluster, the first management device determines the configuration data of the first RAN cluster based on the first intent file and the second radio resource information, and then configures the configuration data on a corresponding resource, for example, on an RRU. In this way, a RAN cluster is autonomously created, autonomous network driving is implemented, and network management efficiency is improved.

In a possible implementation of the first aspect, the first intent file further includes position information of the required radio resource, and the method further includes: the first management device determines the second radio resource information based on the position information of the required radio resource and information indicating a radio resource position in the first radio resource information. Correspondingly, the foregoing step that the first management device determines configuration data of the to-be-created first RAN cluster based on the service requirement, second logical resource information, and second radio resource information includes: The first management device determines the configuration data of the to-be-created first RAN cluster based on the position information of the required radio resource, the service requirement, the second logical resource information, and the second radio resource information.

It should be noted that the position information in this embodiment of this disclosure is usually position information of a coverage area.

In this possible implementation, because two or more RAN clusters may be created based on a radio resource managed by one second management device, the first intent file may provide the position information of the radio resource required for the to-be-created first RAN cluster. In this way, the first management device may select, from the first radio resource information based on the position information, the second radio resource information corresponding to the position information, and generate the configuration data of the first RAN cluster based on the position information. Therefore, accuracy of the configuration data can be improved, and precision of automated network management can be improved.

In a possible implementation of the first aspect, the position information of the required radio resource includes first position information and second position information, the service requirement includes a first service sub-requirement and a second service sub-requirement, the first position information corresponds to the first service sub-requirement, the second position information corresponds to the second service sub-requirement, the first position information is used to indicate a position of a first sub-area in the first RAN cluster, and the second position information is used to indicate a position of a second sub-area in the first RAN cluster. The foregoing step that the first management device determines the configuration data of the to-be-created first RAN cluster based on the position information of the required radio resource, the service requirement, the second logical resource information, and the second radio resource information includes: The first management device determines configuration data of the first sub-area based on the first position information, the first service sub-requirement, the second logical resource information, and the second radio resource information; and the first management device determines configuration data of the second sub-area based on the second position information, the second service sub-requirement, the second logical resource information, and the second radio resource information. Correspondingly, the foregoing step that the first management device deploys the configuration data of the first RAN cluster on a resource indicated by the second radio resource information, to create the first RAN cluster includes: The first management device deploys the configuration data of the first sub-area on a resource that corresponds to the first position information and that is in the second radio resource information; and the first management device deploys the configuration data of the second sub-area on a resource that corresponds to the second position information and that is in the second radio resource information.

In this possible implementation, the first RAN cluster may include two or more sub-areas. The sub-area may be represented by Coverage (Coverage). Service requirements of the sub-areas may be different. For example, if the first RAN cluster is a building, a basement may be a sub-area, a floor on the ground may be a sub-area, and each sub-area has a different service. Therefore, the service requirement also includes different service sub-requirements, and the service sub-requirements correspond to position information of different sub-areas. In this way, when configuration data is to be generated, different configuration data may be generated for different sub-areas. This improves accuracy of the configuration data and precision of automated network management.

In a possible implementation of the first aspect, the first position information includes position information of at least one first sector, and the second position information includes position information of at least one second sector. The foregoing step that the first management device determines configuration data of the first sub-area based on the first position information, the first service sub-requirement, the second logical resource information, and the second radio resource information includes: The first management device determines the configuration data of the first sub-area based on the first position information, the first service sub-requirement, the second logical resource information, and a resource corresponding to a position indicated by the position information of the at least one first sector. The foregoing step that the first management device determines configuration data of the second sub-area based on the second position information, the second service sub-requirement, the second logical resource information, and the second radio resource information includes: The first management device determines the configuration data of the second sub-area based on the first position information, the first service sub-requirement, the second logical resource information, and a resource corresponding to a position indicated by the position information of the at least one second sector.

In this possible implementation, position information of a sub-area may be identified by position information of a sector (Sector). It may be understood that the position information of the sub-area is a set of position information of at least one sector. In this way, when configuration data of a sub-area is to be generated, the configuration data of the sub-area may be generated based on position information of each sector in the set, to improve accuracy of the configuration data.

The method further includes: The first management device receives third radio resource information sent by the second management device, where the third radio resource information is used to indicate a resource that newly goes online; the first management device determines first update configuration data of the first RAN cluster based on the service requirement, the second logical resource information, the second radio resource information, and the third radio resource information, and the first management device updates the first update configuration data to the resource indicated by the second radio resource information and the resource indicated by the third radio resource information.

In this possible implementation, when the second management device detects that a new device goes online, for example, detects that an RRU newly goes online, the second management device may notify the first management device of information about the RRU that newly goes online. The first management device may update the configuration data of the first RAN cluster, then perform, based on updated second update configuration data, reconfiguration on the original resource used for the first RAN cluster and the resource that newly goes online. In this possible implementation, when a new resource goes online, automated network update is implemented, and network management efficiency is improved.

In a possible implementation of the first aspect, the method further includes: The first management device receives fourth radio resource information sent by the second management device, where the fourth radio resource information is used to indicate an offline resource or a resource whose connection relationship changes in the second radio resource information; the first management device determines fifth radio resource information based on the second radio resource information and the fourth radio resource information, where the fifth radio resource information is information about a resource obtained by subtracting the offline resource from the resource indicated by the second radio resource information, or the fifth radio resource information is information about a resource obtained by adjusting, based on the second radio resource information, the resource whose connection relationship changes; the first management device determines second update configuration data of the first RAN cluster based on the service requirement, the second logical resource information, and the fifth radio resource information, and the first management device updates the second update configuration data to the resource indicated by the fifth radio resource information.

In this possible implementation, when the second management device detects that a resource in the resource used for the first RAN cluster goes offline, for example, one RRU goes offline, or a connection relationship between an RRU and a BBU changes, the second management device notifies the first management device of information about the offline RRU or information indicating that the connection relationship changes. The first management device regenerates the second update configuration data based on a remaining resource or a resource obtained after the connection relationship changes, and then deploys the second update configuration data on the remaining resource or the resource obtained after the connection relationship changes. In this possible implementation, when the resource goes offline or the connection relationship changes, automated network update is implemented, and network management efficiency is improved.

In a possible implementation of the first aspect, the first intent file further includes an autonomous network management style parameter, and the method further includes: The first management device obtains a policy file corresponding to the autonomous network management style parameter, where the policy file includes management style data corresponding to the autonomous network management style parameter. The foregoing step that the first management device determines configuration data of the to-be-created first RAN cluster based on the service requirement, second logical resource information, and second radio resource information includes: The first management device determines the configuration data of the to-be-created first RAN cluster based on the service requirement, the second logical resource information, the second radio resource information, and the management style data that corresponds to the autonomous network management style parameter.

In this possible implementation, different values of the autonomous network management style parameter (ClcAutonomousStyle) may indicate RanClusters of different styles. Because the RanClusters usually belong to different operator networks, different coverage areas, and different time periods, autonomous network driving styles of different RanClusters are usually different. Different values of the parameter correspond to different policy files. Therefore, when the configuration data of the first RAN cluster is generated, accuracy of the configuration data can be ensured based on the management style data corresponding to a value of the parameter.

In a possible implementation of the first aspect, a network administration state indicator value in the first intent file is a first value, and the method further includes: The first management device obtains a second intent file, where the network administration state indicator value included in the second intent file is a second value; and the first management device switches a network administration state of the first RAN cluster from a state indicated by the first value to a state indicated by the second value.

In this possible implementation, different indicator values of the network administration state (adminState) indicate different network states. For example, if the first value of adminState is 0, it indicates automated network management; and if the second value of adminState is 1, it indicates manual network management. Alternatively, if the first value of adminState is false, it indicates automated network management; and if the second value of adminState is true, it indicates manual network management. Certainly, the first value and the second value enumerated herein are merely examples for description, and other representation forms of the first value and the second value may also be applicable to this implementation. In this possible implementation, the network administration state can be switched as required to meet requirements in a plurality of scenarios.

In a possible implementation of the first aspect, a frozen management indicator in the first intent file has a first value, and the method further includes: The first management device obtains a third intent file, where the frozen management indicator included in the third intent file has a second value; and the first management device switches a frozen management state of the first RAN cluster from a state indicated by the first value to a state indicated by the second value.

In this possible implementation, different values of the frozen management (Frozen) indicator may indicate that the network is frozen or not frozen. If the network is frozen, it indicates that automated management or manual modification of a network configuration is not allowed. There may be a freezing requirement during a major holiday or in a key area. In this possible implementation, automated network freezing can be implemented provided that the intent file in which the value of the Frozen indicator is the second value is delivered to the first management device, to improve network management efficiency.

In a possible implementation of the first aspect, the position information of the required radio resource includes topology position information of the first sub-area in the first RAN cluster and topology position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the topology position information of the first sub-area in the first RAN cluster, and determines radio resource information of the second sub-area based on the topology position information of the second sub-area in the first RAN cluster, to obtain the second radio resource information.

In this possible implementation, the topology position information may be a device port number. In this possible implementation, matching may be performed based on the topology position information, to diversify position matching.

In a possible implementation of the first aspect, the position information of the required radio resource includes longitude and latitude position information of the first sub-area in the first RAN cluster and longitude and latitude position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the longitude and latitude position information of the first sub-area in the first RAN cluster, and determines radio resource information of the second sub-area based on the longitude and latitude position information of the second sub-area in the first RAN cluster, to obtain the second radio resource information.

In this possible implementation, matching may be performed based on the longitude and latitude information. Certainly, in addition to the longitude and latitude information, height information may be used to diversify position matching.

In a possible implementation of the first aspect, the position information of the required radio resource is angular coordinate position information of the first sub-area in the first RAN cluster and angular coordinate position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the angular coordinate position information of the first sub-area in the first RAN cluster, and determines radio resource information of the second sub-area based on the angular coordinate position information of the second sub-area in the first RAN cluster, to obtain the second radio resource information.

In this possible implementation, matching may be performed based on the angular coordinate position information, to diversify position matching.

In a possible implementation of the first aspect, the position information of the required radio resource is three-dimensional coordinate position information of the first sub-area in the first RAN cluster and three-dimensional coordinate position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the three-dimensional coordinate position information of the first sub-area in the first RAN cluster, and determines radio resource information of the second sub-area based on the three-dimensional coordinate position information of the second sub-area in the first RAN cluster, to obtain the second radio resource information.

In this possible implementation, matching may be performed based on three-dimensional coordinates (x, y, z), to diversify position matching.

A second aspect of this disclosure provides a network management method, including: A second management device obtains resource requirement information used by a first management device to create a first RAN cluster; the second management device determines, based on the resource requirement information, first radio resource information used by the first management device to create the first RAN cluster, where a resource indicated by the first radio resource information is a radio resource detected and managed by the second management device; and the second management device sends the first radio resource information to the first management device, where second radio resource information in the first radio resource information is used by the first management device to create the first RAN cluster.

In the second aspect, the first management device may also be referred to as a RanClusterMgmtFunction (RanClusterMgmtFunction) device, and the second management device may also be referred to as an InfraRscMgmtFunction (InfraRscMgmtFunction) device. The second management device provides an infrastructure resource for the first management device. The first management device may create a RAN cluster (RanCluster), update the RAN cluster, and the like based on the infrastructure resource provided by the second management device. The resource requirement information for creating the first RAN cluster may be a creation indication for the first RAN cluster. If the resource requirement information is a creation indication, the second management device provides all managed radio resources for the first management device to create the first RAN cluster. The resource requirement information for creating the first RAN cluster may alternatively be position information of a resource required for creating the first RAN cluster. In this way, the second management device may select matched radio resource information based on the position information. The first radio resource information may include information about, for example, identifiers of, resources managed by the second management device, such as a baseband unit BBU, a remote radio unit RRU, and a baseband processor BBP. In the second aspect, the second management device provides a radio resource for the first management device, so that the first management device autonomously creates a RAN cluster, thereby implementing autonomous network driving and improving network management efficiency.

The method further includes: The second management device detects a resource that newly goes online; and the second management device sends third radio resource information to the first management device, where the third radio resource information is used to indicate the resource that newly goes online, to indicate the first management device to update a network configuration based on the third radio resource information.

In this possible implementation, the second management device detects that a new device goes online, for example, detects an RRU that newly goes online. In this case, the second management device may notify the first management device of information about the RRU that newly goes online, and the first management device may update a network configuration. In this possible implementation, when a new resource goes online, automated network update is implemented, and network management efficiency is improved.

In a possible implementation of the second aspect, the method further includes: The second management device detects that a resource goes offline or a connection relationship of a resource changes in the second radio resource information; and the second management device sends fourth radio resource information to the first management device, where the fourth radio resource information is used to indicate the offline resource or the resource whose connection relationship changes in the second radio resource information, to indicate the first management device to update a network configuration based on the fourth radio resource information.

In this possible implementation, if the second management device detects that a resource in the resource used for the first RAN cluster goes offline, for example, one RRU goes offline, or a connection relationship between an RRU and a BBU changes, the second management device notifies the first management device of information about the offline RRU or information indicating that the connection relationship changes. The first management device may update a network configuration based on the change. In this possible implementation, when the resource goes offline or the connection relationship changes, automated network update is implemented, and network management efficiency is improved.

In a possible implementation of the second aspect, the method further includes: The second management device determines, based on priorities of at least two management devices for creating a radio access area, a use permission of the resource that newly goes online; and when a priority of the first management device is higher than priorities of other management devices for creating the radio access area in the at least two management devices for creating the radio access area, determines that the first management device obtains the use permission of the resource that newly goes online.

In this possible implementation, when the second management device detects that a new device goes online, for example, detects that an RRU newly goes online, the second management device first detects a priority of each management device, or may detect a priority of an established radio access area (RanCluster), and preferentially allocates the resource that newly goes online to a management device or a RanCluster with a highest priority for use. The use permission of the device that newly goes online may be "exclusive" or "shared". If the use permission is "exclusive", after being allocated to a management device for creating the radio access area, the resource cannot be used by other management devices for creating the radio access area. If the use permission is "shared", the resource can be used by two or more management devices for creating the radio access area. In this possible implementation, through priority control, resources can be preferentially used for a radio access area with a high priority.

In a possible implementation of the second aspect, the method further includes: The second management device determines whether priorities of at least two management devices for creating a radio access area are higher than a priority threshold; and when a priority of the first management device is higher than the priority threshold, determines that the first management device obtains a use permission of the resource that newly goes online.

In this possible implementation, some resources are scarce resources, and the second management device determines, based on the priority threshold during allocation, ownership of the resource that newly goes online. If the priority of the first management device does not reach the priority threshold, even if the priority of the first management device is the highest among all management devices currently for creating the radio access area, the second management device does not allocate the resource to the first management device. In this way, occupation of scarce resources can be avoided. In an initial configuration phase, if the resource is a scarce resource, the second management device also allocates the resource through priority threshold comparison.

In a possible implementation of the second aspect, the resource requirement information includes position information of a required radio resource. The foregoing step that the second management device determines, based on the resource requirement information, first radio resource information used by the first management device to create the first RAN cluster includes: The second management device determines, based on the position information of the required radio resource, the first radio resource information used by the first management device to create the first RAN cluster.

In this possible implementation, the second management device obtains a first radio resource through matching based on the position information of the required radio resource, and then provides the first radio resource for the first management device, so that complexity of performing matching by the first management device can be reduced.

In a possible implementation of the second aspect, the position information of the required radio resource is topology position information of a first sub-area in the first RAN cluster and topology position information of a second sub-area in the first RAN cluster. The foregoing step that the second management device determines, based on the position information of the required radio resource, the first radio resource information used by the first management device to create the first RAN cluster includes: The second management device determines radio resource information of the first sub-area based on the topology position information of the first sub-area in the first RAN cluster, and determines radio resource information of the second sub-area based on the topology position information of the second sub-area in the first RAN cluster, to obtain the first radio resource information.

In this possible implementation, the topology position information may be a device port number. In this possible implementation, matching may be performed based on the topology position information, to diversify position matching.

In a possible implementation of the second aspect, the position information of the required radio resource is longitude and latitude position information of a first sub-area in the first RAN cluster and longitude and latitude position information of a second sub-area in the first RAN cluster. The foregoing step that the second management device determines, based on the position information of the required radio resource, the first radio resource information used by the first management device to create the first RAN cluster includes: The second management device determines radio resource information of the first sub-area based on the longitude and latitude position information of the first sub-area in the first RAN cluster, and determines radio resource information of the second sub-area based on the longitude and latitude position information of the second sub-area in the first RAN cluster, to obtain the first radio resource information.

In this possible implementation, matching may be performed based on the longitude and latitude information. Certainly, in addition to the longitude and latitude information, height information may be used to diversify position matching.

In a possible implementation of the second aspect, the position information of the required radio resource is angular coordinate position information of a first sub-area in the first RAN cluster and angular coordinate position information of a second sub-area in the first RAN cluster. The foregoing step that the second management device determines, based on the position information of the required radio resource, the first radio resource information used by the first management device to create the first RAN cluster includes: The second management device determines radio resource information of the first sub-area based on the angular coordinate position information of the first sub-area in the first RAN cluster, and determines radio resource information of the second sub-area based on the angular coordinate position information of the second sub-area in the first RAN cluster, to obtain the first radio resource information.

In this possible implementation, matching may be performed based on the angular coordinate position information, to diversify position matching.

In a possible implementation of the second aspect, the position information of the required radio resource is three-dimensional coordinate position information of a first sub-area in the first RAN cluster and three-dimensional coordinate position information of a second sub-area in the first RAN cluster. The foregoing step that the second management device determines, based on the position information of the required radio resource, the first radio resource information used by the first management device to create the first RAN cluster includes: The second management device determines radio resource information of the first sub-area based on the three-dimensional coordinate position information of the first sub-area in the first RAN cluster, and determines radio resource information of the second sub-area based on the three-dimensional coordinate position information of the second sub-area in the first RAN cluster, to obtain the first radio resource information.

In this possible implementation, matching may be performed based on three-dimensional coordinates (x, y, z), to diversify position matching.

In a possible implementation of the second aspect, the method further includes: The second management device receives intent information for creating the first RAN cluster; and the second management device determines, based on the intent information for the first RAN cluster, the first management device for creating the first RAN cluster.

In this possible implementation, the second management device may determine the first management device based on the intent information. This reduces manual participation and improves automation of network management.

A third aspect of this disclosure provides a management device, configured to perform the method according to any one of the first aspect or the possible implementations of the first aspect. Specifically, the management device includes modules or units configured to perform the method according to any one of the first aspect or the possible implementations of the first aspect.

A fourth aspect of this disclosure provides a management device, configured to perform the method according to any one of the second aspect or the possible implementations of the second aspect. Specifically, the management device includes modules or units configured to perform the method according to any one of the second aspect or the possible implementations of the second aspect.

A fifth aspect of this disclosure provides a management device, including at least one processor, a memory, a transceiver, and computer-executable instructions that are stored in the memory and that can be run on the processor. When the computer-executable instructions are executed by the processor, the processor performs the method according to any one of the first aspect or the possible implementations of the first aspect.

A sixth aspect of this disclosure provides a management device, including at least one processor, a memory, a transceiver, and computer-executable instructions that are stored in the memory and that can be run on the processor. When the computer-executable instructions are executed by the processor, the processor performs the method according to any one of the second aspect or the possible implementations of the second aspect.

A seventh aspect of this disclosure provides a computer-readable storage medium storing one or more computer-executable instructions. When the computer-executable instructions are executed by a processor, the processor performs the method according to any one of the first aspect or the possible implementations of the first aspect.

An eighth aspect of this disclosure provides a computer-readable storage medium storing one or more computer-executable instructions. When the computer-executable instructions are executed by a processor, the processor performs the method according to any one of the second aspect or the possible implementations of the second aspect. A ninth aspect of this disclosure provides a computer program product storing one or more computer-executable instructions. When the computer-executable instructions are executed by a processor, the processor performs the method according to any one of the first aspect or the possible implementations of the first aspect.

A tenth aspect of this disclosure provides a computer program product storing one or more computer-executable instructions. When the computer-executable instructions are executed by a processor, the processor performs the method according to any one of the second aspect or the possible implementations of the second aspect.

The management device described in the third aspect and the sixth aspect may alternatively be a chip used in the management device, or another combined device, component, or the like that has a function of the management device. The receiving unit in the management device may be a communication interface, for example, an input/output (input/output, I/O) interface. The processing unit may be a processor, for example, a central processing unit (central processing unit, CPU). The sending unit may be a communication interface.

For technical effects brought by any one of the third aspect, the fifth aspect, the seventh aspect, the ninth aspect, or any possible implementation thereof, refer to the technical effects brought by the first aspect or different possible implementations of the first aspect. Details are not described herein again.

For technical effects brought by any one of the fourth aspect, the sixth aspect, the eighth aspect, the tenth aspect, or any possible implementation thereof, refer to the technical effects brought by the second aspect or different possible implementations of the second aspect. Details are not described herein again.

An eleventh aspect of this disclosure provides a network management system, including a first management device and a second management device. The first management device may perform the method according to any one of the first aspect or the possible implementations of the first aspect, and the second management device may perform the method according to any one of the second aspect or the possible implementations of the second aspect. For technical effects brought by the network management system, refer to the technical effects brought by the first aspect or the different possible implementations of the first aspect. Details are not described herein again.

In the technical solutions provided in all the foregoing aspects, the first management device and the second management device may be deployed on a physical computer, or may be deployed on a virtual computer.

### BRIEF DESCRIPTION OF DRAWINGS

FIG. 1 is a schematic diagram of a structure of a network management system according to an example of this disclosure;
FIG. 2 is another schematic diagram of a structure of a network management system according to an example of this disclosure;
FIG. 3 is another schematic diagram of a structure of a network management system according to an example of this disclosure;
FIG. 4 is a schematic diagram of a network management method according to the invention;
FIG. 5 is an example diagram of network management according to an example of this disclosure;
FIG. 6A is another example diagram of network management according to an example of this disclosure;
FIG. 6B is another example diagram of network management according to an example of this disclosure;
FIG. 6C is another example diagram of network management according to an example of this disclosure;
FIG. 6D is another example diagram of network management according to an example of this disclosure;
FIG. 7 is another schematic diagram of a network management method according to the invention;
FIG. 8 is another schematic diagram of an example of a network management method according to examples of this disclosure;
FIG. 9 is a schematic diagram of a management device according to the invention;
FIG. 10 is a schematic diagram of a management device according to the invention; and
FIG. 11 is a schematic diagram of an example of a management device according to examples of this disclosure.

### DETAILED DESCRIPTION

The following describes examples of this disclosure with reference to the accompanying drawings. It is clear that the described examples are merely a part rather than all of examples of this disclosure. A person of ordinary skill in the art may learn that, with technology development and emergence of a new scenario, the technical solutions provided in examples of this disclosure are also applicable to a similar technical problem.

In the specification, claims, and accompanying drawings of this disclosure, terms "first", "second", and the like are intended to distinguish between similar objects but do not necessarily indicate a specific order or sequence. It should be understood that the data used in such a way are interchangeable in appropriate circumstances, so that examples described herein can be implemented in other orders than the content illustrated or described herein. In addition, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

Examples of this disclosure provide a network management method, used for automated network management, to implement autonomous network driving. Examples of this disclosure further provide a corresponding apparatus and system. Details are separately described below.

In examples of this disclosure, automated network management is used as an example to provide a manner of automated management that is based on a RAN cluster (RanCluster). The RAN cluster is a coverage area greater than or equal to a cell (cell). Generally, one RAN cluster includes a plurality of cells. The automated management based on a RAN cluster provided in examples of this disclosure may be implemented by a network management system. As shown in FIG. 1, the network management system includes a first management device and a second management device. The first management device is configured to manage a RAN cluster, and the second management device is configured to manage an infrastructure resource. The first management device may also be referred to as a RanClusterMgmtFunction device, and the second management device may also be referred to as an InfraRscMgmtFunction device. The second management device provides an infrastructure resource for the first management device. The first management device may create a RAN cluster, update the RAN cluster, and the like based on the infrastructure resource provided by the second management device. The network management system further includes a network management infrastructure system, and the network management infrastructure system may manage a plurality of RAN subnetworks. The second management device and the first management device may be in a one-to-one relationship, or may be in a one-to-many relationship. When the second management device and the first management device are in a one-to-many relationship, it means that one infrastructure resource bears two or more RanClusters. For example, one RanCluster provides a public network service, and another RanCluster provides an enterprise private network service. The RanCluster communicates with various types of terminal devices through air interfaces The RanCluster is also connected to a core network or an external data network.

The network management infrastructure system may communicate with the first management device through an Itf-C1 interface, and the network management infrastructure system may communicate with the second management device through an Itf-O1 interface. The Itf-C1 interface supports automated management modeling on the RAN cluster (RanCluster). Itf-O1 supports automated management modeling on regional infrastructure (Infrastructure), and an IP address segment that can be used for an internal network may be defined by using the interface.

The infrastructure resources managed by the second management device include resources such as a baseband unit (baseband unit, BBU), a remote radio unit (remote Radio Unit, RRU), and a baseband processor (baseband processor, BBP). These infrastructures may also be collectively referred to as network elements (network elements, NEs).

In examples of this disclosure, as shown in FIG. 2, a network management system further includes a network management infrastructure system. The network management infrastructure system may include a network management system (network management system, NMS), and may further include an element management system (element management system, EMS). An operation and maintenance administrator may input, by using the network management infrastructure system, an intent file for network management, and the network management infrastructure system distributes the intent file to the first management device, to trigger the first management device to create or update a RAN cluster, and trigger the first management device to autonomously optimize the RAN cluster.

In examples of this disclosure, the first management device and the second management device may be located on a network element or the network management infrastructure system, and may be located on different network elements or a same network element. If the first management device and the second management device are located on the network management infrastructure system, as shown in FIG. 3, the first management device and the second management device may be located on an EMS. Principles of the network management method provided in examples of this disclosure are consistent regardless of positional relationships.

FIG. 1 to FIG. 3 describe possible structures of the network management system provided in examples of this disclosure. The following describes a network management method provided in examples of this disclosure with reference to the accompanying drawings.

As shown in FIG. 4, an example of the network management method provided in examples of this disclosure may include the following steps.

101. A first management device obtains a first intent file.

The first intent file includes a service requirement for creating a first RAN cluster and first logical resource information. The first intent file may be obtained from a network management infrastructure system. If the first management device is a network element, and the network management infrastructure system includes an EMS, the first management device may obtain the first intent file from the EMS. If the network management infrastructure system does not include the EMS, the first management device may obtain the first intent file from an NMS. If the first management device is located in the EMS, the first management device may obtain the first intent file from the NMS.

The service requirement may include a service type, and quality of service (quality of service, QoS) parameters such as a bandwidth, a delay, and a packet loss rate.

The first logical resource information includes an internet protocol (internet protocol, IP) address of a device, an evolved NodeB (evolved NodeB, eNB) identity (identity, ID) list (eNodeBid list), a TAC list, a 5G base station gNB ID (gNodeBid list), a cell identifier list, and the like, and may further include a frequency list, where the IP address may be in a form of a list. The first logical resource information may be understood as a resource pool of these logical resources.

102. A second management device obtains resource requirement information used by the first management device to create the first RAN cluster.

The resource requirement information for creating the first RAN cluster may be obtained from the network management infrastructure system, or may be sent by the first management device.

If infrastructure resources managed by the second management device are all used to create the first RAN cluster, the second management device provides all managed radio resources for the first management device to create the first RAN cluster. The resource requirement information for creating the first RAN cluster may alternatively be position information of a resource required for creating the first RAN cluster. In this way, the second management device may select matched radio resource information based on the position information.

103. The second management device determines, based on the resource requirement information, first radio resource information used by the first management device to create the first RAN cluster.

A resource indicated by the first radio resource information is a radio resource detected and managed by the second management device.

The first radio resource information may include information about, for example, identifiers of, resources managed by the second management device, such as a baseband unit (baseband unit, BBU), a remote radio unit (remote radio unit, RRU), and a baseband processor (baseband processor, BBP).

104. The second management device sends the first radio resource information to the first management device. Correspondingly, the first management device receives the first radio resource information sent by the second management device.

105. The first management device determines configuration data of the to-be-created first RAN cluster based on the service requirement, second logical resource information, and second radio resource information.

The service requirement may include a service type, and quality of service (quality of service, QoS) parameters such as a bandwidth, a delay, and a packet loss rate.

The second logical resource information is included in the first logical resource information, and the second radio resource information is included in the first radio resource information.

The second logical resource information may be the first logical resource information, or may be a subset of the first logical resource information. The second radio resource information may be the first radio resource information, or may be a subset of the first radio resource information.

The configuration data may include configuration data of an eNodeB function, configuration data of a gNodeB function, or configuration data of a cell function.

106. The first management device deploys the configuration data of the first RAN cluster on a resource indicated by the second radio resource information, to create the first RAN cluster.

The first management device deploys the configuration data of the eNodeB function on a corresponding resource, deploys the configuration data of the gNodeB function on a corresponding resource, and deploys the configuration data of the cell function on a corresponding resource, to create a RAN cluster that includes an eNodeB, a gNodeB, and a plurality of cells. After the deployment, a cell corresponds to a device, for example, one or more RRUs. This may also be considered as that a binding relationship is established between data of the cell and the device.

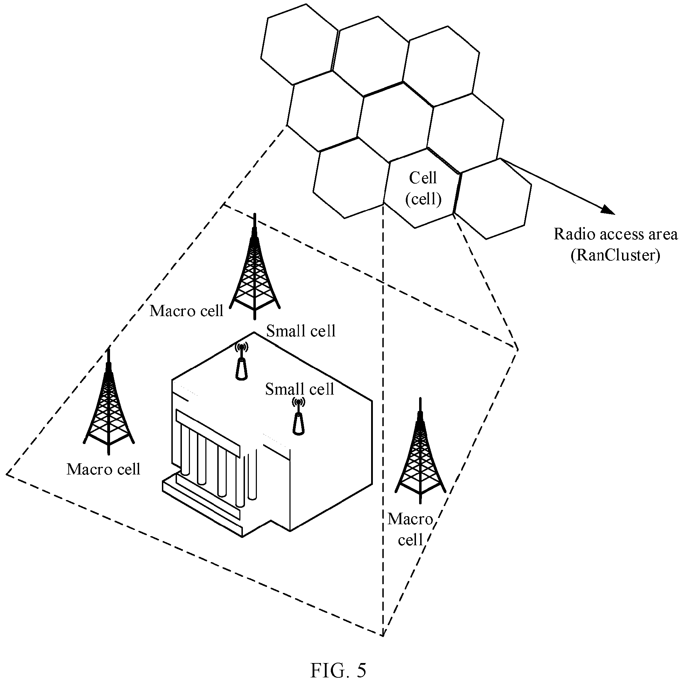

In this example of this disclosure, the created first RAN cluster may include a plurality of cells. As shown in FIG. 5, a RanCluster is created based on infrastructure such as a macro base station and a small base station, and the RanCluster includes a plurality of cells. From a perspective of a user, the first management device may perform management based on RanClusters instead of cells, thereby reducing complexity of network management. From a perspective of the first management device, the first management device may autonomously create and optimize a cell in a RanCluster. This implements automated network management and autonomous network driving.

Optionally, the RanCluster in this example of this disclosure may have the following features.
1. A RanCluster has same "radio service characteristics", including service slicing, service quality, service assurance policies, and the like. The RanCluster has same "operation and maintenance characteristics", including operation and maintenance configurations, performance, alarm interface models, site deployment, planning, optimization policies, resource allocation policies, and the like. That is, the RanCluster has same operation and maintenance requirements. The RanCluster may include zero to a plurality of different coverage areas (Coverages), and the coverage has same service requirements. A case in which there is zero Coverages indicates that the RanCluster is not divided into Coverages, and may also be understood as that the RanCluster is a Coverage.
2. The RanCluster is cohesive to some extent and supported by a "physical interconnection network", that is, a BBU, an active antenna unit (active antenna unit, AAU), a pole site, and the like in the RanCluster are interconnected and coordinated to some extent, and the RanCluster has resource/information sharing requirements based on the support by the foregoing network infrastructure. Cohesion is also reflected in that the RanCluster is "fully aware of" and "independently responsible for" radio services in the RanCluster. That is, for a "same user group", no other areas having same coverage as the RanCluster provide services, that is, there is no service competition. For example, macro and micro base stations with same coverage need to be grouped into one "RanCluster". Because there is no service competition between RanClusters, the first management device may autonomously dynamically allocate and adjust internal resources based on obtained logical resources, changes of the logical resources, and detected service changes.
3. Geographically, a network may be divided into different RanClusters. After the division, regional operation and maintenance of each RanCluster does not affect network operation and maintenance of the entire network. That is, the entire network may be divided into a plurality of RanClusters for independent operation and maintenance management. Geographically, one RanCluster needs to cover an entire factory, campus, building, commercial street, and the like. Management between a plurality of RanClusters such as handover management, management functions, and management timeliness can be weakened.
4. For different user groups active in a geographical area, if their radio traffic is isolated from each other and a radio traffic scenario of one user group is not related to that of another user group, it needs to be considered that the user groups belong to different "RanClusters". For example, if there are public users and enterprise private network users in an area, the public users and the enterprise private network users may be considered as two "RanClusters".
5. An operation and maintenance organization tends to perform operation and maintenance based on RanClusters, including organization responsibilities and organization activities, such as planning, configuration, optimization, and maintenance.

In this example of this disclosure, the first management device is configured to create and update a RAN cluster, and the second management device is configured to detect an infrastructure resource and allocate a resource to a corresponding RAN cluster. The following separately describes steps performed by the first management device and the second management device in the network management process.

Optionally, the first intent file in step 101 further includes position information of the required radio resource. The method further includes: The first management device determines the second radio resource information based on the position information of the required radio resource and information indicating a radio resource position in the first radio resource information. Correspondingly, that the first management device determines configuration data of the to-be-created first RAN cluster based on the service requirement, second logical resource information, and second radio resource information includes: The first management device determines the configuration data of the to-be-created first RAN cluster based on the position information of the required radio resource, the service requirement, the second logical resource information, and the second radio resource information.

In this possible example, because two or more RAN clusters may be created based on a radio resource managed by one second management device, the first intent file may provide the position information of the radio resource required for the to-be-created first RAN cluster. In this way, the first management device may select, from the first radio resource information based on the position information, the second radio resource information corresponding to the position information, and generate the configuration data of the first RAN cluster based on the position information. Therefore, accuracy of the configuration data can be improved, and precision of automated network management can be improved.

Optionally, the position information of the required radio resource includes first position information and second position information, the service requirement includes a first service sub-requirement and a second service sub-requirement, the first position information corresponds to the first service sub-requirement, the second position information corresponds to the second service sub-requirement, the first position information is used to indicate a position of a first sub-area in the first RAN cluster, and the second position information is used to indicate a position of a second sub-area in the first RAN cluster.

That the first management device determines the configuration data of the to-be-created first RAN cluster based on the position information of the required radio resource, the service requirement, the second logical resource information, and the second radio resource information includes: The first management device determines configuration data of the first sub-area based on the first position information, the first service sub-requirement, the second logical resource information, and the second radio resource information; and the first management device determines configuration data of the second sub-area based on the second position information, the second service sub-requirement, the second logical resource information, and the second radio resource information. Correspondingly, that the first management device deploys the configuration data of the first RAN cluster on a resource indicated by the second radio resource information, to create the first RAN cluster includes: The first management device deploys the configuration data of the first sub-area on a resource that corresponds to the first position information and that is in the second radio resource information, and the first management device deploys the configuration data of the second sub-area on a resource that corresponds to the second position information and that is in the second radio resource information.

In this possible example, the first RAN cluster may include two or more sub-areas. The sub-area may be represented by Coverage (Coverage). To indicate that the Coverage is associated with a RanCluster, the Coverage may be represented by clcoverage. Service requirements of the sub-areas may be different. For example, if the first RAN cluster is a building, a basement may be a sub-area, a floor on the ground may be a sub-area, and each sub-area has a different service. Therefore, the service requirement also includes different service sub-requirements, and the service sub-requirements correspond to position information of different sub-areas. In this way, when configuration data is to be generated, different configuration data may be generated for different sub-areas. This improves accuracy of the configuration data and precision of automated network management.

Optionally, the first position information includes position information of at least one first sector, and the second position information includes position information of at least one second sector. That the first management device determines configuration data of the first sub-area based on the first position information, the first service sub-requirement, the second logical resource information, and the second radio resource information includes: The first management device determines the configuration data of the first sub-area based on the first position information, the first service sub-requirement, the second logical resource information, and a resource corresponding to a position indicated by the position information of the at least one first sector. That the first management device determines configuration data of the second sub-area based on the second position information, the second service sub-requirement, the second logical resource information, and the second radio resource information includes: The first management device determines the configuration data of the second sub-area based on the first position information, the first service sub-requirement, the second logical resource information, and a resource corresponding to a position indicated by the position information of the at least one second sector.

In this possible implementation, position information of a sub-area may be identified by position information of a sector (sector). It may be understood that the position information of the sub-area is a set of position information of at least one sector. To indicate that the sector is associated with the RanCluster, the sector may be represented by clsector. In this way, when configuration data of a sub-area is to be generated, the configuration data of the sub-area may be generated based on position information of each sector in the set, to improve accuracy of the configuration data. Certainly, the indication manner is not limited to the manner of indication by the sector. For example, a geographical range specified on a map may also indicate a coverage area of the RanCluster.

The position information of the sector may be represented in a form of topology position information, longitude and latitude position information, angular coordinate position information, or three-dimensional coordinate position information. Details are separately provided below.
1. The position information of the sector is represented in a form of topology position information.

The position information of the required radio resource includes topology position information of the first sub-area in the first RAN cluster and topology position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the topology position information of the first sub-area in the first RAN cluster, and determines radio resource information of the second sub-area based on the topology position information of the second sub-area in the first RAN cluster, to obtain the second radio resource information.

For a representation manner of the topology position information, refer to FIG. 6A for understanding. As shown in FIG. 6A, information about a radio resource includes a BBU, a hub (Hub), an RRU 1, and an RRU 2, and the BBU is connected to the RRU 1 and the RRU 2 by using the hub. A sub-area (Coverage) to which the RRU 1 belongs is floor 1 (floor1) of a building (building), and a clsector name (name) is room1. The topology position information may be a port number of a device, for example, a port number of an RRU. Position information (position) of the RRU 1 may be represented as 1_1_0. "0" in the port number of the RRU 1 indicates that the RRU 1 is inserted into port 0 of the hub, "1" in the middle indicates that the hub is inserted into port 1 of a baseband processor (baseband processor, BBP), and the first "1" indicates that the BBP is inserted into port 1 of the BBU. A sub-area (Coverage) to which the RRU 2 belongs is floor 1 (floor1) of the building (building), and a clsector name (name) is room2. Position information (position) of the RRU 2 may be represented as 1_1_1. The last " 1" in the port number of the RRU 1 indicates that the RRU 1 is inserted into port 1 of the hub, "1" in the middle indicates that the hub is inserted into port 1 of a baseband processor (baseband processor, BBP), and the first "1" indicates that the BBP is inserted into port 1 of the BBU. The position information of the required radio resource further includes a name of a Coverage, a name of a sector, and position information of the Coverage and the sector. The position information of the radio resource further includes position information of the RRU. In this way, the first management device can obtain, through matching based on the topology position information, a radio resource that meets a requirement. For example, if the requirement information further includes the topology position information 1_1_0 and the topology position information 1_1_1, the RRU 1 and the RRU 2 belong to a second radio resource, and information about the RRU 1 and information about the RRU 2 are used when configuration data is generated. After function parameters of a cell are generated, the function parameters of the cell are configured into the RRU 1 and the RRU 2.

2. The position information of the sector is represented in a form of longitude and latitude position information.

The position information of the required radio resource includes longitude and latitude position information of the first sub-area in the first RAN cluster and longitude and latitude position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the longitude and latitude position information of the first sub-area in the first RAN cluster, and determines radio resource information of the second sub-area based on the longitude and latitude position information of the second sub-area in the first RAN cluster, to obtain the second radio resource information. The longitude and latitude position information may include the longitude, the latitude, and the height that are used as a circle center of the sector, and direction information and a coverage radius that are used to indicate sector coverage. In this way, the coverage range of the sector (Sector) can be determined based on the circle center (the longitude, the latitude, and the height), a direction indicated by the direction information, and the coverage radius.

A coverage range of a Coverage can be obtained by combining two or more sectors. All device resources within the coverage range of the sector can be used for the sector.

For a representation manner of the longitude and latitude position information, refer to FIG. 6B for understanding. As shown in FIG. 6B, information about a radio resource includes a BBU, a hub (Hub), an RRU 1, and an RRU 2, and the BBU is connected to the RRU 1 and the RRU 2 by using the hub. A sub-area (Coverage) to which the RRU 1 belongs is floor 1 (floor1) of a building (building), and a clsector name (name) is room1. The longitude and latitude position information is the longitude, the latitude, and the height of a position of a device, for example, the longitude, the latitude, and the height of an RRU. Position information (position) of the RRU 1 may be represented by longitude 1, latitude 1, and height 1. A sub-area (Coverage) to which the RRU 2 belongs is floor 1 (floor1) of the building (building), a clsector name (name) is room2. Position information (position) of the RRU 2 may be represented by longitude 2, latitude 2, and height 2.

The position information of the required radio resource further includes a name of a Coverage, a name of a sector, and position information of the Coverage and the sector. The position information of the radio resource further includes position information of the RRU. In this way, the first management device can obtain, through matching based on the longitude and latitude position information, a radio resource that meets a requirement. For example, if the requirement information further includes the longitude and latitude position information (longitude 1, latitude 1, and height 1) and the longitude and latitude position information (longitude 2, latitude 2, and height 2), the RRU 1 and the RRU 2 belong to a second radio resource, and information about the RRU 1 and information about the RRU 2 are used when configuration data is generated. After function parameters of a cell are generated, the function parameters of the cell are configured into the RRU 1 and the RRU 2.

3. The position information of the sector is represented in a form of angular coordinate position information.

The position information of the required radio resource is angular coordinate position information of the first sub-area in the first RAN cluster and angular coordinate position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the angular coordinate position information of the first sub-area in the first RAN cluster, and determines radio resource information of the second sub-area based on the angular coordinate position information of the second sub-area in the first RAN cluster, to obtain the second radio resource information. The angular coordinate position information may include the angle, the radius, the height, and direction information and a coverage radius of the sector that are used to indicate sector coverage. In this way, a coverage range of the sector (Sector) can be determined by using a position indicated by the angle, the radius, and the height as a circle center and based on the coverage radius and a direction that is indicated by the direction information. A coverage range of a Coverage can be obtained by combining two or more sectors. All device resources within the coverage range of the sector can be used for the sector.

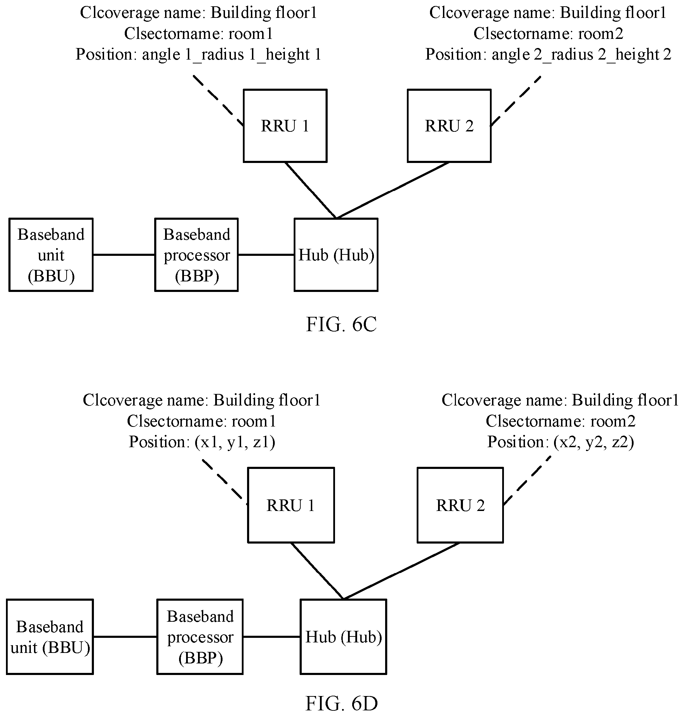

For a representation manner of the angular coordinate position information, refer to FIG. 6C for understanding. As shown in FIG. 6C, information about a radio resource includes a BBU, a hub (Hub), an RRU 1, and an RRU 2, and the BBU is connected to the RRU 1 and the RRU 2 by using the hub. A sub-area (Coverage) to which the RRU 1 belongs is floor 1 (floor1) of a building (building), and a clsector name (name) is room1. The angular coordinate position information is the angle, the radius, and the height of a position of a device, for example, the angle, the radius, and the height of an RRU. Position information (position) of the RRU 1 may be represented by angle 1, radius 1, and height 1. A sub-area (Coverage) to which the RRU 2 belongs is floor 1 (floor1) of the building (building), a clsector name (name) is room2. Position information (position) of the RRU 2 may be represented by angle 2, radius 2, and height 2.

The position information of the required radio resource further includes a name of a Coverage, a name of a sector, and position information of the Coverage and the sector. The position information of the radio resource further includes position information of the RRU. In this way, the first management device can obtain, through matching based on the angular coordinate position information, a radio resource that meets a requirement. For example, if the requirement information further includes the angular coordinate position information (angle 1, radius 1, and height 1) and the angular coordinate position information (angle 2, radius 2, and height 2), the RRU 1 and the RRU 2 belong to a second radio resource, and information about the RRU 1 and information about the RRU 2 are used when configuration data is generated. After function parameters of a cell are generated, the function parameters of the cell are configured into the RRU 1 and the RRU 2.

4. The position information of the sector is represented in a form of three-dimensional coordinate position information. The position information of the required radio resource is three-dimensional coordinate position information of the first sub-area in the first RAN cluster and three-dimensional coordinate position information of the second sub-area in the first RAN cluster. The foregoing step that the first management device determines the second radio resource information based on the position information of the required radio resource and information indicating a radio resource position in the first radio resource information includes: The first management device determines radio resource information of the first sub-area based on the three-dimensional coordinate position information of the first sub-area in the first RAN cluster, and determines radio resource information of the second sub-area based on the three-dimensional coordinate position information of the second sub-area in the first RAN cluster, to obtain the second radio resource information. The three-dimensional coordinate position information may include x, y, and z in a three-dimensional coordinate axis that are used as a circle center of the sector, and direction information and a coverage radius that are used to indicate sector coverage. In this way, a coverage range of the sector (Sector) can be determined based on the circle center (x, y, z), a direction indicated by the direction information, and the coverage radius. A coverage range of a Coverage can be obtained by combining two or more sectors. All device resources within the coverage range of the sector can be used for the sector.

For a representation manner of the three-dimensional coordinate position information, refer to FIG. 6D for understanding. As shown in FIG. 6D, information about a radio resource includes a BBU, a hub (Hub), an RRU 1, and an RRU 2, and the BBU is connected to the RRU 1 and the RRU 2 by using the hub. A sub-area (Coverage) to which the RRU 1 belongs is floor 1 (floor1) of a building (building), and a clsector name (name) is room1. The three-dimensional coordinate position information is x, y, and z of the device in the three-dimensional coordinate axis, for example, x, y, and z of an RRU. Position information (position) of the RRU 1 may be represented as (x1, y1, z1). A sub-area (Coverage) to which the RRU 2 belongs is floor 1 (floor1) of the building (building), and a clsector name (name) is room2. Position information (position) of the RRU 2 may be represented as (x2, y2, z2).

The position information of the required radio resource further includes a name of a Coverage, a name of a sector, and position information of the Coverage and the sector. The position information of the radio resource further includes position information of the RRU. In this way, the first management device can obtain, through matching based on the three-dimensional coordinate position information, a radio resource that meets a requirement. For example, if the requirement information further includes the three-dimensional coordinate position information (x1, y1, z1) and the three-dimensional coordinate position information (x2, y2, z2), the RRU 1 and the RRU 2 belong to a second radio resource, and information about the RRU 1 and information about the RRU 2 are used when configuration data is generated. After the function parameters of a cell are generated, the function parameters of the cell are configured into the RRU 1 and the RRU 2.

The foregoing describes a solution in which the first management device determines a second radio resource in a first radio resource based on the position information of the required radio resource. Actually, the second management device may also determine an appropriate first radio resource based on the position information of the radio resource required by the first management device.

From a perspective of the second management device, the foregoing process may include: The resource requirement information includes position information of a required radio resource; and that the second management device determines, based on the resource requirement information, first radio resource information used by the first management device to create the first RAN cluster includes: The second management device determines, based on the position information of the required radio resource, the first radio resource information used by the first management device to create the first RAN cluster.

Optionally, the position information of the required radio resource is topology position information of a first sub-area in the first RAN cluster and topology position information of a second sub-area in the first RAN cluster. That the second management device determines, based on the position information of the required radio resource, the first radio resource information used by the first management device to create the first RAN cluster includes: The second management device determines radio resource information of the first sub-area based on the topology position information of the first sub-area in the first RAN cluster, and determines radio resource information of the second sub-area based on the topology position information of the second sub-area in the first RAN cluster, to obtain the first radio resource information.

Optionally, the position information of the required radio resource is longitude and latitude position information of a first sub-area in the first RAN cluster and longitude and latitude position information of a second sub-area in the first RAN cluster. That the second management device determines, based on the position information of the required radio resource, the first radio resource information used by the first management device to create the first RAN cluster includes: The second management device determines radio resource information of the first sub-area based on the longitude and latitude position information of the first sub-area in the first RAN cluster, and determines radio resource information of the second sub-area based on the longitude and latitude position information of the second sub-area in the first RAN cluster, to obtain the first radio resource information.

Optionally, the position information of the required radio resource is angular coordinate position information of the first sub-area in the first RAN cluster and angular coordinate position information of the second sub-area in the first RAN cluster. That the second management device determines, based on the position information of the required radio resource, the first radio resource information used by the first management device to create the first RAN cluster includes: The second management device determines radio resource information of the first sub-area based on the angular coordinate position information of the first sub-area in the first RAN cluster, and determines radio resource information of the second sub-area based on the angular coordinate position information of the second sub-area in the first RAN cluster, to obtain the first radio resource information.

Optionally, the position information of the required radio resource is three-dimensional coordinate position information of the first sub-area in the first RAN cluster and three-dimensional coordinate position information of the second sub-area in the first RAN cluster. That the second management device determines, based on the position information of the required radio resource, the first radio resource information used by the first management device to create the first RAN cluster includes: The second management device determines radio resource information of the first sub-area based on the three-dimensional coordinate position information of the first sub-area in the first RAN cluster, and determines radio resource information of the second sub-area based on the three-dimensional coordinate position information of the second sub-area in the first RAN cluster, to obtain the first radio resource information.

For a process in which the second management device determines the radio resource information based on the topology position information, the longitude and latitude position information, the angular coordinate position information, or the three-dimensional coordinate position information, refer to the descriptions of FIG. 6A to FIG. 6D on a side of the first management device for understanding. Details are not described herein again.

It should be noted that the position information in this example of this disclosure is usually position information of a coverage area. For example, position information of a sector is position information of a coverage area of the sector, and position information of a Coverage is position information of a coverage area of the Coverage.

In this example of this disclosure, the first RAN cluster may be dynamically updated based on a change of a device, and a service in the first RAN cluster may be dynamically adjusted based on a network status.

It is assumed that uplink-synchronized users in a cell are overloaded and a T302 timer is adjusted. The first management device periodically and dynamically monitors all base stations and cells in the first RAN cluster. If it is found that uplink users in a cell served by a base station are overloaded, a value on T302 increases. 2 seconds are increased in this example. A network behavior is that after access of a terminal is rejected, time for the terminal to autonomously access a network next time is required to be increased by 2 seconds. When quantities of uplink UEs in all cells served by the base station are far lower than an overload threshold (meet fallback logic), T302 autonomously falls back step by step until the value on T302 finally falls back to an initial configuration value of T302.

In this example of this disclosure, due to a change of infrastructure resources, a new device may go online, and an existing device may go offline, or a connection relationship between devices in existing devices may change. In this case, the second management device manages the infrastructure resources and notifies the first management device of the change. The following separately describes cases in which a new device goes online, an existing device goes offline, and a connection relationship changes.

### 1. A new device goes online.

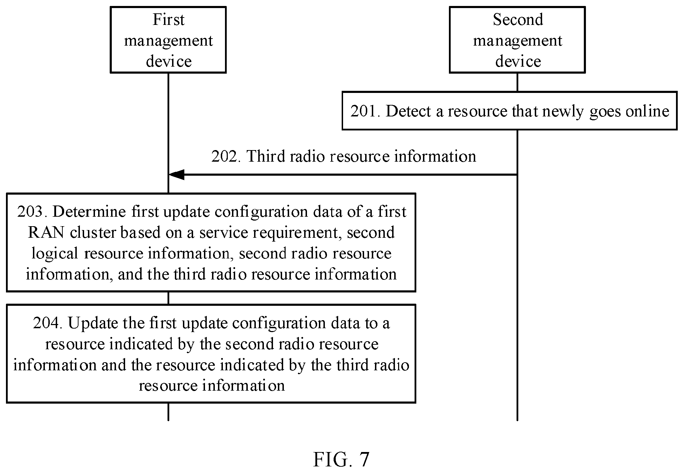

As shown in FIG. 7, the network management method provided in this disclosure includes the following steps.

201. A second management device detects a resource that newly goes online.

The newly online resource may be a newly online RRU or another available resource.

202. The second management device sends third radio resource information to a first management device. Correspondingly, the first management device receives the third radio resource information sent by the second management device.

The third radio resource information is used to indicate the resource that newly goes online, to indicate the first management device to update a network configuration based on the third radio resource information.

203. The first management device determines first update configuration data of a first RAN cluster based on a service requirement, second logical resource information, second radio resource information, and the third radio resource information.

For a process of determining the first update configuration data, refer to the process of determining the configuration data in step 105.

204. The first management device updates the first update configuration data to a resource indicated by the second radio resource information and the resource indicated by the third radio resource information.

For this step, refer to step 106.

Optionally, the second management device determines, based on priorities of at least two management devices for creating a radio access area, a use permission of the resource that newly goes online; and when a priority of the first management device is higher than priorities of other management devices for creating the radio access area in the at least two management devices for creating the radio access area, determines that the first management device obtains the use permission of the resource that newly goes online.

In this possible example, when detecting that a new device goes online, for example, when detecting that a new RRU goes online, the second management device first detects priorities of management devices for creating the radio access area, or detects priorities of created radio access areas, and preferentially provides the resource that newly goes online for a management device with a highest priority. The use permission of the device that newly goes online may be "exclusive" or "shared". If the use permission is "exclusive", after being allocated to a management device for creating the radio access area, the resource cannot be used by other management devices for creating the radio access area. If the use permission is "shared", the resource can be used by two or more management devices for creating the radio access area. In this possible implementation, through priority control, resources can be preferentially used for a radio access area with a high priority.

The second management device determines whether priorities of at least two management devices for creating a radio access area are higher than a priority threshold; and when a priority of the first management device is higher than the priority threshold, determines that the first management device obtains a use permission of the resource that newly goes online.

In this possible example, some resources that newly go online are scarce resources. During allocation, the second management device determines, based on a priority threshold, ownership of the resources that newly go online. If the priority of the first management device does not reach the priority threshold, even if the priority of the first management device is the highest among all management devices currently for creating the radio access area, the second management device does not allocate the resource to the first management device. In this way, occupation of scarce resources can be avoided.

### 2. An existing device goes offline and a connection relationship changes.

As shown in FIG. 8, another example of the network management method provided in examples of this disclosure may include the following steps.

301. A second management device detects that a resource goes offline or a connection relationship of a resource changes in second radio resource information.

For example, an RRU goes offline, or a connection relationship between an RRU and a BBU changes.

302. The second management device sends fourth radio resource information to a first management device.

The fourth radio resource information is used to indicate the resource that goes offline or a resource whose connection relationship changes in the second radio resource information, to indicate the first management device to update a network configuration based on the fourth radio resource information.

303. The first management device determines fifth radio resource information based on the second radio resource information and the fourth radio resource information.

The fifth radio resource information is information about a resource obtained by subtracting the offline resource from the resource indicated by the second radio resource information, or the fifth radio resource information is information about a resource obtained by adjusting, based on the second radio resource information, the resource whose connection relationship changes.

304. The first management device determines second update configuration data of a first RAN cluster based on a service requirement, second logical resource information, and the fifth radio resource information.

For a process of determining the second update configuration data, refer to the process of determining the configuration data in step 105.

305. The first management device updates the second update configuration data to the resource indicated by the fifth radio resource information.

For this step, refer to step 106.

When a device is replaced, a new device for replacement can be bound to an existing cell of the original device. According to the solution provided in this example of this disclosure, a network can be autonomously updated when a new device goes online, an existing device goes offline, or a connection relationship between existing devices changes, to improve network management efficiency.

A first intent file may further include an autonomous network management style parameter (ClcAutonomousStyle), a network administration state (adminState), a frozen management (Frozen) indicator, or the like. ClcAutonomousStyle, adminState, and Frozen may indicate different functions based on different values. The first management device may perform different network management based on different values of these parameters. The following separately describes the parameters.

### 1. ClcAutonomousStyle

The first intent file further includes an autonomous network management style parameter (ClcAutonomousStyle). The method further includes: The first management device obtains a policy file corresponding to the autonomous network management style parameter, where the policy file includes management style data corresponding to the autonomous network management style parameter. Step 105 may include: The first management device determines the configuration data of the to-be-created first RAN cluster based on the service requirement, the second logical resource information, the second radio resource information, and the management style data that corresponds to the autonomous network management style parameter.

In this possible example, different values of the autonomous network management style parameter (ClcAutonomousStyle) may indicate different operator networks, different coverage areas, different time periods, or different autonomous network driving styles. Different values of the parameter correspond to different policy files. Therefore, when the configuration data of the first RAN cluster is generated, accuracy of the configuration data can be ensured based on the management style data corresponding to a value of the parameter.

For a scenario related to ClcAutonomousStyle, refer to the following Table 1.

**Table 1 Network characteristics in different industries**

| | Mainly video surveillance | Mainly remote control | Mainly industrial control |
|---|---|---|---|
| Delay | Intermediate | High | Extremely high |
| Bandwidth | High uplink | High | High |
| Energy Saving | High | Low | Low |
| Reliability | Intermediate | Extremely high | Extremely high |

Table 1 shows network characteristics of three different industries. Energy saving is used as an example. A network focusing on video surveillance attaches more importance to energy saving, while a network focusing on remote control and a network focusing on industrial control attach more importance to reliability, and do not require energy saving. Therefore, when parameter values of ClcAutonomousStyle indicate different networks, selected policy files are different, and configuration parameters generated for networks of these types are also different.

Not only do different industries have different policy requirements, but networks in different areas also have different requirements, as shown in Table 2.

**Table 2 Network characteristics in different areas**

| | Rural area | Urban road | Central business district |
|---|---|---|---|
| Delay | Intermediate | Intermediate | Intermediate |
| Bandwidth | Intermediate | Intermediate | Intermediate |
| Energy Saving | High | Low | Low |
| Reliability | Intermediate | High | Extremely high |

Table 2 shows network characteristics of three different areas. Energy saving is still used as an example. Energy saving is first considered in rural areas, and reliability, instead of energy saving, is mainly considered in urban areas and central business districts. Therefore, when parameter values of ClcAutonomousStyle indicate different areas, selected policy files are different, and configuration parameters generated for networks of these types are also different.

Certainly, there are many classification manners. The classification manners in Table 1 and Table 2 are merely examples. If operators have different value orientations, policies corresponding to values of ClcAutonomousStyle are also different.

### 2. adminState

A network administration state indicator value in the first intent file is a first value. The method further includes: The first management device obtains a second intent file, where the network administration state indicator value included in the second intent file is a second value; and the first management device switches a network administration state of the first RAN cluster from a state indicated by the first value to a state indicated by the second value.

In this possible example, different indicator values of the network administration state (adminState) indicate different network states. For example, if the first value of adminState is 0, it indicates automated network management; and if the second value of adminState is 1, it indicates manual network management. Alternatively, if the first value of adminState is false, it indicates automated network management; and if the second value of adminState is true, it indicates manual network management. Certainly, the first value and the second value enumerated herein are merely examples for description, and other representation forms of the first value and the second value may also be applicable to this implementation. In this way, the first management device can switch the network administration state based on a requirement, to meet requirements in a plurality of scenarios.

### 3. Frozen

A frozen management indicator in the first intent file has a first value. The method further includes: The first management device obtains a third intent file, where the frozen management indicator included in the third intent file has a second value; and the first management device switches a frozen management state of the first RAN cluster from a state indicated by the first value to a state indicated by the second value.

In this possible example, different values of the frozen management (Frozen) indicator may indicate that the network is frozen or not frozen. If the network is frozen, it indicates that automated management or manual modification of a network configuration is not allowed. There may be a freezing requirement during a major holiday or in a key area. In this case, automated network freezing can be implemented provided that the intent file in which the value of the Frozen indicator is the second value is delivered to the first management device, to improve network management efficiency.

The foregoing describes the network management system and the network management method. The following describes a management device in examples of this disclosure with reference to the accompanying drawings.

As shown in FIG. 9, the management device provided in this disclosure may include
a processing unit 501, configured to obtain a first intent file, where the first intent file includes a service requirement for creating a first RAN cluster and first logical resource information; and
a receiving unit 502, configured to receive first radio resource information sent by a second management device.

The processing unit 501 is further configured to: determine configuration data of the to-be-created first RAN cluster based on the service requirement, second logical resource information, and second radio resource information, where the second logical resource information is included in the first logical resource information, and the second radio resource information is included in the first radio resource information; and deploy the configuration data of the first RAN cluster on a resource indicated by the second radio resource information, to create the first RAN cluster.

In a possible example, the first intent file further includes position information of the required radio resource.

The processing unit 501 is further configured to determine the second radio resource information based on the position information of the required radio resource and information indicating a radio resource position in the first radio resource information.

The processing unit 501 is configured to determine the configuration data of the to-be-created first RAN cluster based on the position information of the required radio resource, the service requirement, the second logical resource information, and the second radio resource information.

In a possible example, the position information of the required radio resource includes first position information and second position information, the service requirement includes a first service sub-requirement and a second service sub-requirement, the first position information corresponds to the first service sub-requirement, the second position information corresponds to the second service sub-requirement, the first position information is used to indicate a position of a first sub-area in the first RAN cluster, and the second position information is used to indicate a position of a second sub-area in the first RAN cluster.

The processing unit 501 is configured to: determine configuration data of the first sub-area based on the first position information, the first service sub-requirement, the second logical resource information, and the second radio resource information; and determine configuration data of the second sub-area based on the second position information, the second service sub-requirement, the second logical resource information, and the second radio resource information. The processing unit 501 is configured to: deploy the configuration data of the first sub-area on a resource that corresponds to the first position information and that is in the second radio resource information; and deploy the configuration data of the second sub-area on a resource that corresponds to the second position information and that is in the second radio resource information.

In a possible example, the first position information includes position information of at least one first sector, and the second position information includes position information of at least one second sector.

The processing unit 501 is configured to: determine the configuration data of the first sub-area based on the first position information, the first service sub-requirement, the second logical resource information, and a resource corresponding to a position indicated by the position information of the at least one first sector; and determine the configuration data of the second sub-area based on the first position information, the first service sub-requirement, the second logical resource information, and a resource corresponding to a position indicated by the position information of the at least one second sector.

The processing unit 501 is further configured to receive third radio resource information sent by the second management device, where the third radio resource information is used to indicate a resource that newly goes online; determine first update configuration data of the first RAN cluster based on the service requirement, the second logical resource information, the second radio resource information, and the third radio resource information; and update the first update configuration data to the resource indicated by the second radio resource information and the resource indicated by the third radio resource information.

In a possible example, the receiving unit 502 is further configured to receive fourth radio resource information sent by the second management device, where the fourth radio resource information is used to indicate an offline resource or a resource whose connection relationship changes in the second radio resource information.

The processing unit 501 is further configured to: determine fifth radio resource information based on the second radio resource information and the fourth radio resource information, where the fifth radio resource information is information about a resource obtained by subtracting the offline resource from the resource indicated by the second radio resource information, or the fifth radio resource information is information about a resource obtained by adjusting, based on the second radio resource information, the resource whose connection relationship changes; determine second update configuration data of the first RAN cluster based on the service requirement, the second logical resource information, and the fifth radio resource information; and update the second update configuration data to the resource indicated by the fifth radio resource information.

In a possible example, the first intent file further includes an autonomous network management style parameter. The processing unit 501 is further configured to obtain a policy file corresponding to the autonomous network management style parameter, where the policy file includes management style data corresponding to the autonomous network management style parameter.

The processing unit 501 is configured to determine the configuration data of the to-be-created first RAN cluster based on the service requirement, the second logical resource information, the second radio resource information, and the management style data that corresponds to the autonomous network management style parameter.

In a possible example, a network administration state indicator value in the first intent file is a first value. The processing unit 501 is further configured to: obtain a second intent file, where the network administration state indicator value included in the second intent file is a second value; and switch a network administration state of the first RAN cluster from a state indicated by the first value to a state indicated by the second value.

In a possible example, a frozen management indicator in the first intent file has a first value. The processing unit 501 is further configured to: obtain a third intent file, where the frozen management indicator included in the third intent file has a second value; and switch a frozen management state of the first RAN cluster from a state indicated by the first value to a state indicated by the second value.

In a possible example, the position information of the required radio resource includes topology position information of the first sub-area in the first RAN cluster and topology position information of the second sub-area in the first RAN cluster. The processing unit 501 is configured to: determine radio resource information of the first sub-area based on the topology position information of the first sub-area in the first RAN cluster, and determine radio resource information of the second sub-area based on the topology position information of the second sub-area in the first RAN cluster, to obtain the second radio resource information.

In a possible example, the position information of the required radio resource includes longitude and latitude position information of the first sub-area in the first RAN cluster and longitude and latitude position information of the second sub-area in the first RAN cluster. The processing unit 501 is configured to: determine radio resource information of the first sub-area based on the longitude and latitude position information of the first sub-area in the first RAN cluster, and determine radio resource information of the second sub-area based on the longitude and latitude position information of the second sub-area in the first RAN cluster, to obtain the second radio resource information.

In a possible example, the position information of the required radio resource is angular coordinate position information of the first sub-area in the first RAN cluster and angular coordinate position information of the second sub-area in the first RAN cluster. The processing unit 501 is configured to: determine radio resource information of the first sub-area based on the angular coordinate position information of the first sub-area in the first RAN cluster, and determine radio resource information of the second sub-area based on the angular coordinate position information of the second sub-area in the first RAN cluster, to obtain the second radio resource information.

In a possible example, the position information of the required radio resource is three-dimensional coordinate position information of the first sub-area in the first RAN cluster and three-dimensional coordinate position information of the second sub-area in the first RAN cluster. The processing unit 501 is configured to: determine radio resource information of the first sub-area based on the three-dimensional coordinate position information of the first sub-area in the first RAN cluster, and determine radio resource information of the second sub-area based on the three-dimensional coordinate position information of the second sub-area in the first RAN cluster, to obtain the second radio resource information.

It should be noted that, because the management device described above is based on a same concept as the method examples of this disclosure, technical effects brought by the management device are the same as those brought by the method examples of this disclosure. For specific content, refer to the descriptions of the first management device in the foregoing method examples of this disclosure. Details are not described herein again.

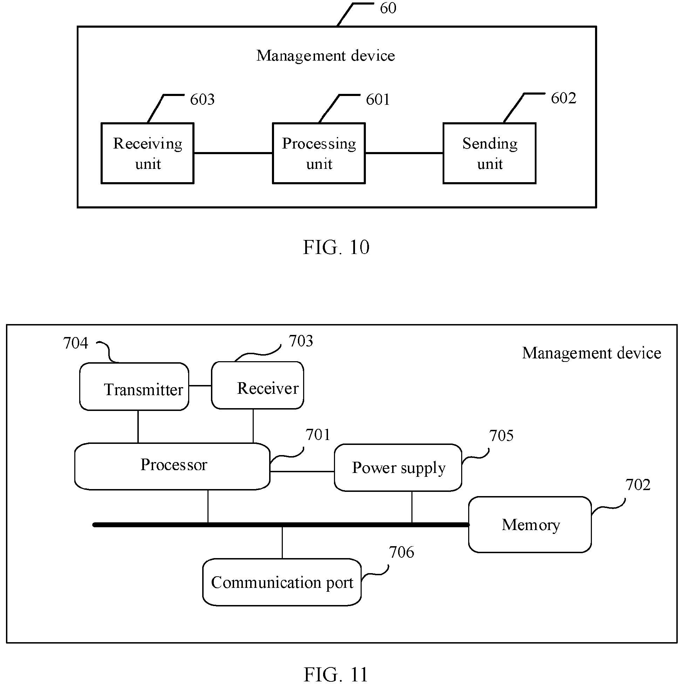

As shown in FIG. 10, the management device provided in this disclosure may include
a processing unit 601, configured to: obtain resource requirement information used by a first management device to create a first RAN cluster; and determine, based on the resource requirement information, first radio resource information used by the first management device to create the first RAN cluster, where a resource indicated by the first radio resource information is a radio resource detected and managed by a second management device; and
a sending unit 602, configured to send the first radio resource information to the first management device, where second radio resource information in the first radio resource information is used by the first management device to create the first RAN cluster.

The processing unit 601 is further configured to detect a resource that newly goes online. The sending unit 602 is further configured to send third radio resource information to the first management device, where the third radio resource information is used to indicate the resource that newly goes online, to indicate the first management device to update a network configuration based on the third radio resource information.

In a possible example, the processing unit 601 is further configured to detect that a resource goes offline or a connection relationship of a resource changes in the second radio resource information.

The sending unit 602 is further configured to send fourth radio resource information to the first management device, where the fourth radio resource information is used to indicate the offline resource or the resource whose connection relationship changes in the second radio resource information, to indicate the first management device to update a network configuration based on the fourth radio resource information.

In a possible example, the processing unit 601 is further configured to: determine, based on priorities of at least two management devices for creating a radio access area, a use permission of the resource that newly goes online; and when a priority of the first management device is higher than priorities of other management devices for creating the radio access area in the at least two management devices for creating the radio access area, determine that the first management device obtains the use permission of the resource that newly goes online.

In a possible example, the processing unit 601 is further configured to determine whether priorities of at least two management devices for creating a radio access area are higher than a priority threshold; and when a priority of the first management device is higher than the priority threshold, determine that the first management device obtains a use permission of the resource that newly goes online.

In a possible example, the resource requirement information includes position information of a required radio resource. The processing unit 601 is configured to determine, based on the position information of the required radio resource, the first radio resource information used by the first management device to create the first RAN cluster.

In a possible example, the position information of the required radio resource is topology position information of a first sub-area in the first RAN cluster and topology position information of a second sub-area in the first RAN cluster. The processing unit 601 is configured to: determine radio resource information of the first sub-area based on the topology position information of the first sub-area in the first RAN cluster, and determine radio resource information of the second sub-area based on the topology position information of the second sub-area in the first RAN cluster, to obtain the first radio resource information.

In a possible example, the position information of the required radio resource is longitude and latitude position information of a first sub-area in the first RAN cluster and longitude and latitude position information of a second sub-area in the first RAN cluster. The processing unit 601 is configured to: determine radio resource information of the first sub-area based on the longitude and latitude position information of the first sub-area in the first RAN cluster, and determine radio resource information of the second sub-area based on the longitude and latitude position information of the second sub-area in the first RAN cluster, to obtain the first radio resource information.

In a possible example, the position information of the required radio resource is angular coordinate position information of a first sub-area in the first RAN cluster and angular coordinate position information of a second sub-area in the first RAN cluster. The processing unit 601 is configured to: determine radio resource information of the first sub-area based on the angular coordinate position information of the first sub-area in the first RAN cluster, and determine radio resource information of the second sub-area based on the angular coordinate position information of the second sub-area in the first RAN cluster, to obtain the first radio resource information.

In a possible example, the position information of the required radio resource is three-dimensional coordinate position information of a first sub-area in the first RAN cluster and three-dimensional coordinate position information of a second sub-area in the first RAN cluster. The processing unit 601 is configured to: determine radio resource information of the first sub-area based on the three-dimensional coordinate position information of the first sub-area in the first RAN cluster, and determine radio resource information of the second sub-area based on the three-dimensional coordinate position information of the second sub-area in the first RAN cluster, to obtain the first radio resource information.

In a possible example, the management device further includes a receiving unit 603, configured to receive intent information for creating the first RAN cluster.

The processing unit 601 is configured to determine, based on the intent information for the first RAN cluster, the first management device for creating the first RAN cluster.

It should be noted that, because the management device described above is based on a same concept as the method examples of this disclosure, technical effects brought by the management device are the same as those brought by the method examples of this disclosure. For specific content, refer to the descriptions of the second management device in the foregoing method examples of this disclosure. Details are not described herein again.

An example of this disclosure further provides a computer storage medium. The computer storage medium stores a program. The program is executed to perform some or all of the steps recorded in the method examples.

FIG. 11 is a schematic diagram of a structure of still another management device according to an example of this disclosure. The management device may be a server, or may be another device that can implement a function of this disclosure. The management device may include a processor 701 (for example, a CPU), a memory 702, a transmitter 704, and a receiver 703. The transmitter 704 and the receiver 703 are coupled to the processor 701, and the processor 701 controls a sending action of the transmitter 704 and a receiving action of the receiver 703. The memory 702 may include a high-speed RAM memory, or may include a nonvolatile memory NVM, for example, at least one magnetic disk memory. The memory 702 may store various instructions, to perform various processing functions and implement the method steps in examples of this disclosure. Optionally, the management device in this example of this disclosure may further include one or both of a power supply 705 and a communication port 706. The components described in FIG. 11 may be connected via a communication bus, or may be connected in another connection manner. This is not limited in this example of this disclosure. The receiver 703 and the transmitter 704 may be integrated into a transceiver of the management device, or may be independent receive and transmit antennas of the management device. The communication bus is configured to implement communication and connection between elements. The communication port 706 is configured to implement connection and communication between the management device and another peripheral device.

In some examples, the memory 702 is configured to store computer-executable program code, and the program code includes instructions. When the processor 701 executes the instructions, the processor 701 in the management device may perform an action performed by the processing unit 501 in FIG. 9, and the receiver 703 or the communication port 706 in the management device may perform an action performed by the receiving unit 502 in FIG. 9. Implementation principles and technical effects thereof are similar, and details are not described herein again.

In some examples, the memory 702 is configured to store computer-executable program code, and the program code includes instructions. When the processor 701 executes the instructions, the processor 701 in the management device may perform an action performed by the processing unit 601 in FIG. 10, the receiver 703 or the communication port 706 in the management device may perform an action performed by the receiving unit 603 in FIG. 10, and the transmitter 704 or the communication port 706 in the management device may perform an action performed by the sending unit 602 in FIG. 10. Implementation principles and technical effects thereof are similar, and details are not described herein again.

This disclosure further provides a chip system. The chip system includes a processor, configured to support the foregoing management device in implementing functions related to the management device, for example, receiving or processing data and/or information in the foregoing method examples. In a possible design, the chip system further includes a memory, where the memory is configured to store program instructions and data that are necessary for a computer device. The chip system may include a chip, or may include a chip and another discrete component.

All or some of the foregoing examples may be implemented by using software, hardware, firmware, or any combination thereof. When software is used to implement examples, all or some of examples may be implemented in a form of a computer program product.

The computer program product includes one or more computer instructions. When the computer program instructions are loaded and executed on a computer, the procedures or the functions according to examples of this disclosure are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (SSD)), or the like.

It may be clearly understood by a person skilled in the art that, for the purpose of convenient and brief description, for a detailed working process of the foregoing system, apparatus, and unit, refer to a corresponding process in the foregoing method examples, and details are not described herein again.

In the several examples provided in this disclosure, it should be understood that the disclosed system, apparatus, and method may be implemented in other manners. For example, the described apparatus examples are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of examples. In addition, each function unit in examples of this disclosure may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and is sold or used as an independent product, the integrated unit may be stored in a computer-readable storage medium. Based on such an understanding, the technical solutions of this disclosure essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in examples of this disclosure. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A network management method, comprising:
obtaining, by a first management device (50), a first intent file, wherein the first intent file comprises a service requirement for creating a first RAN cluster and first logical resource information;
receiving, by the first management device (50), first radio resource information sent by a second management device (60);
determining, by the first management device (50), configuration data of the to-be-created first RAN cluster based on the service requirement, second logical resource information, and second radio resource information, wherein the second logical resource information is comprised in the first logical resource information, and the second radio resource information is comprised in the first radio resource information; and
deploying, by the first management device (50), the configuration data of the first RAN cluster on a resource indicated by the second radio resource information, to create the first RAN cluster,
wherein the method is **characterized in that** the method further comprises:
receiving, by the first management device (50), third radio resource information sent by the second management device (60), wherein the third radio resource information indicates a resource that newly goes online;
determining, by the first management device (50), first update configuration data of the first RAN cluster based on the service requirement, the second logical resource information, the second radio resource information, and the third radio resource information; and
updating, by the first management device (50), the first update configuration data to the resource indicated by the second radio resource information and the resource indicated by the third radio resource information,
wherein
the first radio resource information includes information about resources managed by the second management device (60),
the second radio resource information is the first radio resource information or a subset of the first radio resource information,
the first logical resource information includes an internet protocol address of a device, an evolved NodeB identity, a 5G base station gNB identity or a cell identifier, and
the second logical resource information is the first logical resource information or a subset of the first logical resource information.

2. The method according to claim 1, wherein the first intent file further comprises position information of the required radio resource, and the method further comprises:
determining, by the first management device (50), the second radio resource information based on the position information of the required radio resource and information indicating a radio resource position in the first radio resource information; and
the determining, by the first management device (50), configuration data of the to-be-created first RAN cluster based on the service requirement, second logical resource information, and second radio resource information comprises:
determining, by the first management device (50), the configuration data of the to-be-created first RAN cluster based on the position information of the required radio resource, the service requirement, the second logical resource information, and the second radio resource information.

3. The method according to claim 2, wherein the position information of the required radio resource comprises first position information and second position information, the service requirement comprises a first service sub-requirement and a second service sub-requirement, the first position information corresponds to the first service sub-requirement, the second position information corresponds to the second service sub-requirement, the first position information is used to indicate a position of a first sub-area in the first RAN cluster, and the second position information is used to indicate a position of a second sub-area in the first RAN cluster;
the determining, by the first management device (50), the configuration data of the to-be-created first RAN cluster based on the position information of the required radio resource, the service requirement, the second logical resource information, and the second radio resource information comprises:
determining, by the first management device (50), configuration data of the first sub-area based on the first position information, the first service sub-requirement, the second logical resource information, and the second radio resource information; and
determining, by the first management device (50), configuration data of the second sub-area based on the second position information, the second service sub-requirement, the second logical resource information, and the second radio resource information; and
the deploying, by the first management device (50), the configuration data of the first RAN cluster on a resource indicated by the second radio resource information, to create the first RAN cluster comprises:
deploying, by the first management device (50), the configuration data of the first sub-area on a resource that corresponds to the first position information and that is in the second radio resource information; and
deploying, by the first management device (50), the configuration data of the second sub-area on a resource that corresponds to the second position information and that is in the second radio resource information.

4. The method according to claim 3, wherein the first position information comprises position information of at least one first sector, and the second position information comprises position information of at least one second sector;
the determining, by the first management device (50), configuration data of the first sub-area based on the first position information, the first service sub-requirement, the second logical resource information, and the second radio resource information comprises:
determining, by the first management device (50), the configuration data of the first sub-area based on the first position information, the first service sub-requirement, the second logical resource information, and a resource corresponding to a position indicated by the position information of the at least one first sector; and
the determining, by the first management device (50), configuration data of the second sub-area based on the second position information, the second service sub-requirement, the second logical resource information, and the second radio resource information comprises:
determining, by the first management device (50), the configuration data of the second sub-area based on the first position information, the first service sub-requirement, the second logical resource information, and a resource corresponding to a position indicated by the position information of the at least one second sector.

5. The method according to any one of claims 1 to 4, wherein the method further comprises:
receiving, by the first management device (50), fourth radio resource information sent by the second management device (60), wherein the fourth radio resource information is used to indicate an offline resource or a resource whose connection relationship changes in the second radio resource information;
determining, by the first management device (50), fifth radio resource information based on the second radio resource information and the fourth radio resource information, wherein the fifth radio resource information is information about a resource obtained by subtracting the offline resource from the resource indicated by the second radio resource information, or the fifth radio resource information is information about a resource obtained by adjusting, based on the second radio resource information, the resource whose connection relationship changes;
determining, by the first management device (50), second update configuration data of the first RAN cluster based on the service requirement, the second logical resource information, and the fifth radio resource information; and
updating, by the first management device (50), the second update configuration data to the resource indicated by the fifth radio resource information.

6. The method according to any one of claims 1 to 5, wherein the first intent file further comprises an autonomous network management style parameter and different values of the autonomous network management style parameter indicate RanClusters of different styles, and the method further comprises:
obtaining, by the first management device (50), a policy file corresponding to the autonomous network management style parameter, wherein the policy file comprises management style data corresponding to the autonomous network management style parameter; and
the determining, by the first management device (50), configuration data of the to-be-created first RAN cluster based on the service requirement, second logical resource information, and second radio resource information comprises:
determining, by the first management device (50), the configuration data of the to-be-created first RAN cluster based on the service requirement, the second logical resource information, the second radio resource information, and the management style data that corresponds to the autonomous network management style parameter.

7. A network management method, comprising:
obtaining, by a second management device (60), resource requirement information used by a first management device (50) to create a first RAN cluster;
determining, by the second management device (60) based on the resource requirement information, first radio resource information used by the first management device (50) to create the first RAN cluster, wherein a resource indicated by the first radio resource information is a radio resource detected and managed by the second management device (60); and
sending, by the second management device (60), the first radio resource information to the first management device (50), wherein second radio resource information in the first radio resource information is used by the first management device (50) to create the first RAN cluster,
wherein the method is **characterized in that** the method further comprises:
detecting, by the second management device (60), a resource that newly goes online; and
sending, by the second management device (60), third radio resource information to the first management device (50), wherein the third radio resource information indicates the resource that newly goes online, to indicate the first management device (50) to update a network configuration based on the third radio resource information,
wherein
the first radio resource information includes information about resources managed by the second management device (60), and
the second radio resource information is the first radio resource information or a subset of the first radio resource information.

8. The method according to claim 7, wherein the method further comprises:
detecting, by the second management device (60), that a resource goes offline or a connection relationship of a resource changes in the second radio resource information; and
sending, by the second management device (60), fourth radio resource information to the first management device (50), wherein the fourth radio resource information is used to indicate the offline resource or the resource whose connection relationship changes in the second radio resource information, to indicate the first management device (50) to update a network configuration based on the fourth radio resource information.

9. The method according to claim 7, wherein the method further comprises:
determining, by the second management device (60) based on priorities of at least two management devices for creating a radio access area, a use permission of the resource that newly goes online; and
when a priority of the first management device (50) is higher than priorities of other management devices for creating the radio access area in the at least two management devices for creating the radio access area, determining that the first management device (50) obtains the use permission of the resource that newly goes online.

10. The method according to claim 7, wherein the method further comprises:
determining, by the second management device (60), whether priorities of at least two management devices for creating a radio access area are higher than a priority threshold; and
when a priority of the first management device (50) is higher than the priority threshold, determining that the first management device (50) obtains a use permission of the resource that newly goes online.

11. The method according to any one of claims 7 to 10, wherein the resource requirement information comprises position information of a required radio resource; and
the determining, by the second management device (60) based on the resource requirement information, first radio resource information used by the first management device (50) to create the first RAN cluster comprises:
determining, by the second management device (60) based on the position information of the required radio resource, the first radio resource information used by the first management device (50) to create the first RAN cluster.

12. A management device (50), comprising units (501, 502) configured to perform the method according to any one of claims 1 to 6.

13. A management device (60), comprising units (601, 602, 603) configured to perform the method according to any one of claims 7 to 10.

## Patentansprüche

1. Netzwerkverwaltungsverfahren, umfassend:
Erlangen, durch eine erste Verwaltungsvorrichtung (50), einer ersten Intent-Datei, wobei die erste Intent-Datei eine Dienstanforderung zum Erstellen eines ersten RAN-Clusters und erste logische Ressourceninformationen umfasst;
Empfangen, durch die erste Verwaltungsvorrichtung (50), von ersten Funkressourceninformationen, die durch eine zweite Verwaltungsvorrichtung (60) gesendet werden;
Bestimmen, durch die erste Verwaltungsvorrichtung (50), von Konfigurationsdaten des zu erstellenden ersten RAN-Clusters basierend auf der Dienstanforderung, zweiten logischen Ressourceninformationen und zweiten Funkressourceninformationen, wobei die zweiten logischen Ressourceninformationen in den ersten logischen Ressourceninformationen umfasst sind und die zweiten Funkressourceninformationen in den ersten Funkressourceninformationen umfasst sind; und
Bereitstellen, durch die erste Verwaltungsvorrichtung (50), der Konfigurationsdaten des ersten RAN-Clusters auf einer durch die zweiten Funkressourceninformationen angegebenen Ressource, um den ersten RAN-Cluster zu erstellen,
wobei das Verfahren **dadurch gekennzeichnet ist, dass** das Verfahren ferner Folgendes umfasst:
Empfangen, durch die erste Verwaltungsvorrichtung (50), von dritten Funkressourceninformationen, die durch die zweite Verwaltungsvorrichtung (60) gesendet werden, wobei die dritten Funkressourceninformationen eine Ressource angeben, die neu online geht;
Bestimmen, durch die erste Verwaltungsvorrichtung (50), von ersten Aktualisierungskonfigurationsdaten des ersten RAN-Clusters basierend auf der Dienstanforderung, den zweiten logischen Ressourceninformationen, den zweiten Funkressourceninformationen und den dritten Funkressourceninformationen; und
Aktualisieren, durch die erste Verwaltungsvorrichtung (50), der ersten Aktualisierungskonfigurationsdaten auf die durch die zweiten Funkressourceninformationen angegebene Ressource und die durch die dritten Funkressourceninformationen angegebene Ressource,
wobei
die ersten Funkressourceninformationen Informationen über Ressourcen beinhalten, die durch die zweite Verwaltungsvorrichtung (60) verwaltet werden,
die zweiten Funkressourceninformationen die ersten Funkressourceninformationen oder eine Teilmenge der ersten Funkressourceninformationen sind,
die ersten logischen Ressourceninformationen eine Internetprotokolladresse einer Vorrichtung, eine weiterentwickelte NodeB-Identität, eine gNB-Identität einer 5G-Basisstation oder eine Zellkennung beinhalten und
die zweiten logischen Ressourceninformationen die ersten logischen Ressourceninformationen oder eine Teilmenge der ersten logischen Ressourceninformationen sind.

2. Verfahren nach Anspruch 1, wobei die erste Intent-Datei ferner Positionsinformationen der erforderlichen Funkressource umfasst und das Verfahren ferner Folgendes umfasst:
Bestimmen, durch die erste Verwaltungsvorrichtung (50), der zweiten Funkressourceninformationen basierend auf den Positionsinformationen der erforderlichen Funkressource und Informationen, die eine Funkressourcenposition in den ersten Funkressourceninformationen angeben; und
das Bestimmen, durch die erste Verwaltungsvorrichtung (50), von Konfigurationsdaten des zu erstellenden ersten RAN-Clusters basierend auf der Dienstanforderung, zweiten logischen Ressourceninformationen und zweiten Funkressourceninformationen Folgendes umfasst:
Bestimmen, durch die erste Verwaltungsvorrichtung (50), der Konfigurationsdaten des zu erstellenden ersten RAN-Clusters basierend auf den Positionsinformationen der erforderlichen Funkressource, der Dienstanforderung, den zweiten logischen Ressourceninformationen und den zweiten Funkressourceninformationen.

3. Verfahren nach Anspruch 2, wobei die Positionsinformationen der erforderlichen Funkressource erste Positionsinformationen und zweite Positionsinformationen umfassen, die Dienstanforderung eine erste Dienstunteranforderung und eine zweite Dienstunteranforderung umfasst, die ersten Positionsinformationen der ersten Dienstunteranforderung entsprechen, die zweiten Positionsinformationen der zweiten Dienstunteranforderung entsprechen, die ersten Positionsinformationen dazu verwendet werden, eine Position eines ersten Unterbereichs in dem ersten RAN-Cluster anzugeben, und die zweiten Positionsinformationen dazu verwendet werden, eine Position eines zweiten Unterbereichs in dem ersten RAN-Cluster anzugeben;
das Bestimmen, durch die erste Verwaltungsvorrichtung (50), der Konfigurationsdaten des zu erstellenden ersten RAN-Clusters basierend auf den Positionsinformationen der erforderlichen Funkressource, der Dienstanforderung, den zweiten logischen Ressourceninformationen und den zweiten Funkressourceninformationen Folgendes umfasst:
Bestimmen, durch die erste Verwaltungsvorrichtung (50), von Konfigurationsdaten des ersten Unterbereichs basierend auf den ersten Positionsinformationen, der ersten Dienstunteranforderung, den zweiten logischen Ressourceninformationen und den zweiten Funkressourceninformationen; und
Bestimmen, durch die erste Verwaltungsvorrichtung (50), von Konfigurationsdaten des zweiten Unterbereichs basierend auf den zweiten Positionsinformationen, der zweiten Dienstunteranforderung, den zweiten logischen Ressourceninformationen und den zweiten Funkressourceninformationen; und
das Bereitstellen, durch die erste Verwaltungsvorrichtung (50), der Konfigurationsdaten des ersten RAN-Clusters auf einer durch die zweiten Funkressourceninformationen angegebenen Ressource, um den ersten RAN-Cluster zu erstellen, Folgendes umfasst:
Bereitstellen, durch die erste Verwaltungsvorrichtung (50), der Konfigurationsdaten des ersten Unterbereichs auf einer Ressource, die den ersten Positionsinformationen entspricht und die sich in den zweiten Funkressourceninformationen befindet; und
Bereitstellen, durch die erste Verwaltungsvorrichtung (50), der Konfigurationsdaten des zweiten Unterbereichs auf einer Ressource, die den zweiten Positionsinformationen entspricht und die sich in den zweiten Funkressourceninformationen befindet.

4. Verfahren nach Anspruch 3, wobei die ersten Positionsinformationen Positionsinformationen von mindestens einem ersten Sektor umfassen und die zweiten Positionsinformationen Positionsinformationen von mindestens einem zweiten Sektor umfassen;
das Bestimmen, durch die erste Verwaltungsvorrichtung (50), von Konfigurationsdaten des ersten Unterbereichs basierend auf den ersten Positionsinformationen, der ersten Dienstunteranforderung, den zweiten logischen Ressourceninformationen und den zweiten Funkressourceninformationen Folgendes umfasst:
Bestimmen, durch die erste Verwaltungsvorrichtung (50), der Konfigurationsdaten des ersten Unterbereichs basierend auf den ersten Positionsinformationen, der ersten Dienstunteranforderung, den zweiten logischen Ressourceninformationen und einer Ressource, die einer Position entspricht, die durch die Positionsinformationen des mindestens einen ersten Sektors angegeben wird; und
das Bestimmen, durch die erste Verwaltungsvorrichtung (50), von Konfigurationsdaten des zweiten Unterbereichs basierend auf den zweiten Positionsinformationen, der zweiten Dienstunteranforderung, den zweiten logischen Ressourceninformationen und den zweiten Funkressourceninformationen Folgendes umfasst:
Bestimmen, durch die erste Verwaltungsvorrichtung (50), der Konfigurationsdaten des zweiten Unterbereichs basierend auf den ersten Positionsinformationen, der ersten Dienstunteranforderung, den zweiten logischen Ressourceninformationen und einer Ressource, die einer Position entspricht, die durch die Positionsinformationen des mindestens einen zweiten Sektors angegeben wird.

5. Verfahren nach einem der Ansprüche 1 bis 4, wobei das Verfahren ferner Folgendes umfasst:
Empfangen, durch die erste Verwaltungsvorrichtung (50), von vierten Funkressourceninformationen, die durch die zweite Verwaltungsvorrichtung (60) gesendet werden, wobei die vierten Funkressourceninformationen dazu verwendet werden, eine Offline-Ressource oder eine Ressource anzugeben, deren Verbindungsbeziehung sich in den zweiten Funkressourceninformationen ändert;
Bestimmen, durch die erste Verwaltungsvorrichtung (50), von fünften Funkressourceninformationen basierend auf den zweiten Funkressourceninformationen und den vierten Funkressourceninformationen, wobei die fünften Funkressourceninformationen Informationen über eine Ressource sind, die durch Subtrahieren der Offline-Ressource von der durch die zweiten Funkressourceninformationen angegebenen Ressource erlangt werden, oder die fünften Funkressourceninformationen Informationen über eine Ressource sind, die durch Anpassen, basierend auf den zweiten Funkressourceninformationen, der Ressource, deren Verbindungsbeziehung sich ändert, erlangt werden;
Bestimmen, durch die erste Verwaltungsvorrichtung (50), von zweiten Aktualisierungskonfigurationsdaten des ersten RAN-Clusters basierend auf der Dienstanforderung, den zweiten logischen Ressourceninformationen und den fünften Funkressourceninformationen; und
Aktualisieren, durch die erste Verwaltungsvorrichtung (50), der zweiten Aktualisierungskonfigurationsdaten auf die durch die fünften Funkressourceninformationen angegebene Ressource.

6. Verfahren nach einem der Ansprüche 1 bis 5, wobei die erste Intent-Datei ferner einen Parameter eines autonomen Netzwerkverwaltungsstils umfasst und unterschiedliche Werte des Parameters eines autonomen Netzwerkverwaltungsstils RanCluster unterschiedlicher Stile angeben und das Verfahren ferner Folgendes umfasst:
Erlangen, durch die erste Verwaltungsvorrichtung (50), einer Richtliniendatei, die dem Parameter eines autonomen Netzwerkverwaltungsstils entspricht, wobei die Richtliniendatei Verwaltungsstildaten umfasst, die dem Parameter eines autonomen Netzwerkverwaltungsstils entsprechen; und
das Bestimmen, durch die erste Verwaltungsvorrichtung (50), von Konfigurationsdaten des zu erstellenden ersten RAN-Clusters basierend auf der Dienstanforderung, zweiten logischen Ressourceninformationen und zweiten Funkressourceninformationen Folgendes umfasst:
Bestimmen, durch die erste Verwaltungsvorrichtung (50), der Konfigurationsdaten des zu erstellenden ersten RAN-Clusters basierend auf der Dienstanforderung, den zweiten logischen Ressourceninformationen, den zweiten Funkressourceninformationen und den Verwaltungsstildaten, die dem Parameter eines autonomen Netzwerkverwaltungsstils entsprechen.

7. Netzwerkverwaltungsverfahren, umfassend:
Erlangen, durch eine zweite Verwaltungsvorrichtung (60), von Ressourcenanforderungsinformationen, die durch eine erste Verwaltungsvorrichtung (50) dazu verwendet werden, einen ersten RAN-Cluster zu erstellen;
Bestimmen, durch die zweite Verwaltungsvorrichtung (60) basierend auf den Ressourcenanforderungsinformationen, erster Funkressourceninformationen, die durch die erste Verwaltungsvorrichtung (50) dazu verwendet werden, den ersten RAN-Cluster zu erstellen, wobei eine durch die ersten Funkressourceninformationen angegebene Ressource eine Funkressource ist, die durch die zweite Verwaltungsvorrichtung (60) erkannt und verwaltet wird; und
Senden, durch die zweite Verwaltungsvorrichtung (60), der ersten Funkressourceninformationen an die erste Verwaltungsvorrichtung (50), wobei zweite Funkressourceninformationen in den ersten Funkressourceninformationen durch die erste Verwaltungsvorrichtung (50) dazu verwendet werden, den ersten RAN-Cluster zu erstellen,
wobei das Verfahren **dadurch gekennzeichnet ist, dass** das Verfahren ferner Folgendes umfasst:
Erkennen, durch die zweite Verwaltungsvorrichtung (60), einer Ressource, die neu online geht; und
Senden, durch die zweite Verwaltungsvorrichtung (60), von dritten Funkressourceninformationen an die erste Verwaltungsvorrichtung (50), wobei die dritten Funkressourceninformationen die Ressource angeben, die neu online geht, um der ersten Verwaltungsvorrichtung (50) anzugeben, eine Netzwerkkonfiguration basierend auf den dritten Funkressourceninformationen zu aktualisieren,
wobei
die ersten Funkressourceninformationen Informationen über Ressourcen beinhalten, die durch die zweite Verwaltungsvorrichtung (60) verwaltet werden, und
die zweiten Funkressourceninformationen die ersten Funkressourceninformationen oder eine Teilmenge der ersten Funkressourceninformationen sind.

8. Verfahren nach Anspruch 7, wobei das Verfahren ferner Folgendes umfasst:
Erkennen, durch die zweite Verwaltungsvorrichtung (60), dass eine Ressource offline geht oder eine Verbindungsbeziehung einer Ressource sich in den zweiten Funkressourceninformationen ändert; und
Senden, durch die zweite Verwaltungsvorrichtung (60), von vierten Funkressourceninformationen an die erste Verwaltungsvorrichtung (50), wobei die vierten Funkressourceninformationen dazu verwendet werden, die Offline-Ressource oder die Ressource, deren Verbindungsbeziehung sich in den zweiten Funkressourceninformationen ändert, anzugeben, um der ersten Verwaltungsvorrichtung (50) anzugeben, eine Netzwerkkonfiguration basierend auf den vierten Funkressourceninformationen zu aktualisieren.

9. Verfahren nach Anspruch 7, wobei das Verfahren ferner Folgendes umfasst:
Bestimmen, durch die zweite Verwaltungsvorrichtung (60) basierend auf Prioritäten von mindestens zwei Verwaltungsvorrichtungen zum Erstellen eines Funkzugangsbereichs, einer Nutzungsberechtigung der Ressource, die neu online geht; und
wenn eine Priorität der ersten Verwaltungsvorrichtung (50) höher ist als Prioritäten anderer Verwaltungsvorrichtungen zum Erstellen des Funkzugangsbereichs in den mindestens zwei Verwaltungsvorrichtungen zum Erstellen des Funkzugangsbereichs, Bestimmen, dass die erste Verwaltungsvorrichtung (50) die Nutzungsberechtigung der Ressource, die neu online geht, erlangt.

10. Verfahren nach Anspruch 7, wobei das Verfahren ferner Folgendes umfasst:
Bestimmen, durch die zweite Verwaltungsvorrichtung (60), ob Prioritäten von mindestens zwei Verwaltungsvorrichtungen zum Erstellen eines Funkzugangsbereichs höher sind als ein Prioritätsschwellenwert; und
wenn eine Priorität der ersten Verwaltungsvorrichtung (50) höher ist als der Prioritätsschwellenwert, Bestimmen, dass die erste Verwaltungsvorrichtung (50) eine Nutzungsberechtigung der Ressource, die neu online geht, erlangt.

11. Verfahren nach einem der Ansprüche 7 bis 10, wobei die Ressourcenanforderungsinformationen Positionsinformationen einer erforderlichen Funkressource umfassen; und
das Bestimmen, durch die zweite Verwaltungsvorrichtung (60) basierend auf den Ressourcenanforderungsinformationen, von ersten Funkressourceninformationen, die durch die erste Verwaltungsvorrichtung (50) dazu verwendet werden, den ersten RAN-Cluster zu erstellen, Folgendes umfasst:
Bestimmen, durch die zweite Verwaltungsvorrichtung (60) basierend auf den Positionsinformationen der erforderlichen Funkressource, der ersten Funkressourceninformationen, die durch die erste Verwaltungsvorrichtung (50) dazu verwendet werden, den ersten RAN-Cluster zu erstellen.

12. Verwaltungsvorrichtung (50), umfassend Einheiten (501, 502), die dazu konfiguriert sind, das Verfahren nach einem der Ansprüche 1 bis 6 durchzuführen.

13. Verwaltungsvorrichtung (60), umfassend Einheiten (601, 602, 603), die dazu konfiguriert sind, das Verfahren nach einem der Ansprüche 7 bis 10 durchzuführen.

## Revendications

1. Procédé de gestion de réseau, comprenant :
l'obtention, par un premier dispositif de gestion (50), d'un premier fichier d'intention, dans lequel le premier fichier d'intention comprend une exigence de service pour créer un premier cluster RAN et des premières informations de ressources logiques ;
la réception, par le premier dispositif de gestion (50), de premières informations de ressources radio envoyées par un second dispositif de gestion (60) ;
la détermination, par le premier dispositif de gestion (50), de données de configuration du premier cluster RAN à créer sur la base de l'exigence de service, de secondes informations de ressources logiques, et de deuxièmes informations de ressources radio, dans lequel les secondes informations de ressources logiques sont comprises dans les premières informations de ressources logiques, et les deuxièmes informations de ressources radio sont comprises dans les premières informations de ressources radio ; et
le déploiement, par le premier dispositif de gestion (50), des données de configuration du premier cluster RAN sur une ressource indiquée par les deuxièmes informations de ressources radio, pour créer le premier cluster RAN,
dans lequel le procédé est **caractérisé en ce que** le procédé comprend également :
la réception, par le premier dispositif de gestion (50), de troisièmes informations de ressources radio envoyées par le second dispositif de gestion (60), dans lequel les troisièmes informations de ressources radio indiquent une ressource qui est nouvellement mise en ligne ;
la détermination, par le premier dispositif de gestion (50), de premières données de configuration de mise à jour du premier cluster RAN sur la base de l'exigence de service, des secondes informations de ressources logiques, des deuxièmes informations de ressources radio, et des troisièmes informations de ressources radio ; et
la mise à jour, par le premier dispositif de gestion (50), des premières données de configuration de mise à jour vers la ressource indiquée par les deuxièmes informations de ressources radio et vers la ressource indiquée par les troisièmes informations de ressources radio,
dans lequel
les premières informations de ressources radio comportent des informations sur les ressources gérées par le second dispositif de gestion (60),
les deuxièmes informations de ressources radio sont les premières informations de ressources radio ou un sous-ensemble des premières informations de ressources radio,
les premières informations de ressources logiques comportent une adresse de protocole Internet d'un dispositif, une identité de nœud B évolué, une identité de station de base 5G gNB ou un identifiant de cellule, et
les secondes informations de ressources logiques sont les premières informations de ressources logiques ou un sous-ensemble des premières informations de ressources logiques.

2. Procédé selon la revendication 1, dans lequel le premier fichier d'intention comprend également des informations de position de la ressource radio requise, et le procédé comprend également :
la détermination, par le premier dispositif de gestion (50), des deuxièmes informations de ressources radio sur la base des informations de position de la ressource radio requise et d'informations indiquant une position de ressource radio dans les premières informations de ressources radio ; et
la détermination, par le premier dispositif de gestion (50), de données de configuration du premier cluster RAN à créer sur la base de l'exigence de service, de secondes informations de ressources logiques, et de deuxièmes informations de ressources radio comprend :
la détermination, par le premier dispositif de gestion (50), des données de configuration du premier cluster RAN à créer sur la base des informations de position de la ressource radio requise, de l'exigence de service, des secondes informations de ressources logiques, et des deuxièmes informations de ressources radio.

3. Procédé selon la revendication 2, dans lequel les informations de position de la ressource radio requise comprennent des premières informations de position et des secondes informations de position, l'exigence de service comprend une première sous-exigence de service et une seconde sous-exigence de service, les premières informations de position correspondent à la première sous-exigence de service, les secondes informations de position correspondent à la seconde sous-exigence de service, les premières informations de position sont utilisées pour indiquer une position d'une première sous-zone dans le premier cluster RAN, et les secondes informations de position sont utilisées pour indiquer une position d'une seconde sous-zone dans le premier cluster RAN ;
la détermination, par le premier dispositif de gestion (50), des données de configuration du premier cluster RAN à créer sur la base des informations de position de la ressource radio requise, de l'exigence de service, des secondes informations de ressources logiques, et des deuxièmes informations de ressources radio comprend :
la détermination, par le premier dispositif de gestion (50), de données de configuration de la première sous-zone sur la base des premières informations de position, de la première sous-exigence de service, des secondes informations de ressources logiques, et des deuxièmes informations de ressources radio ; et la détermination, par le premier dispositif de gestion (50), de données de configuration de la seconde sous-zone sur la base des secondes informations de position, de la seconde sous-exigence de service, des secondes informations de ressources logiques, et des deuxièmes informations de ressources radio ; et
le déploiement, par le premier dispositif de gestion (50), des données de configuration du premier cluster RAN sur une ressource indiquée par les deuxièmes informations de ressources radio, pour créer le premier cluster RAN comprend :
le déploiement, par le premier dispositif de gestion (50), des données de configuration de la première sous-zone sur une ressource qui correspond aux premières informations de position et qui se trouve dans les deuxièmes informations de ressources radio ; et
le déploiement, par le premier dispositif de gestion (50), des données de configuration de la seconde sous-zone sur une ressource qui correspond aux secondes informations de position et qui se trouve dans les deuxièmes informations de ressources radio.

4. Procédé selon la revendication 3, dans lequel les premières informations de position comprennent des informations de position d'au moins un premier secteur, et les secondes informations de position comprennent des informations de position d'au moins un second secteur ;
la détermination, par le premier dispositif de gestion (50), de données de configuration de la première sous-zone sur la base des premières informations de position, de la première sous-exigence de service, des secondes informations de ressources logiques, et des deuxièmes informations de ressources radio comprend :
la détermination, par le premier dispositif de gestion (50), des données de configuration de la première sous-zone sur la base des premières informations de position, de la première sous-exigence de service, des secondes informations de ressources logiques, et d'une ressource correspondant à une position indiquée par les informations de position de l'au moins un premier secteur ; et
la détermination, par le premier dispositif de gestion (50), de données de configuration de la seconde sous-zone sur la base des secondes informations de position, de la seconde sous-exigence de service, des secondes informations de ressources logiques, et des deuxièmes informations de ressources radio comprend :
la détermination, par le premier dispositif de gestion (50), des données de configuration de la seconde sous-zone sur la base des premières informations de position, de la première sous-exigence de service, des secondes informations de ressources logiques, et d'une ressource correspondant à une position indiquée par les informations de position de l'au moins un second secteur.

5. Procédé selon l'une quelconque des revendications 1 à 4, dans lequel le procédé comprend également :
la réception, par le premier dispositif de gestion (50), de quatrièmes informations de ressources radio envoyées par le second dispositif de gestion (60), dans lequel les quatrièmes informations de ressources radio sont utilisées pour indiquer une ressource hors ligne ou une ressource dont la relation de connexion change dans les deuxièmes informations de ressources radio ;
la détermination, par le premier dispositif de gestion (50), de cinquièmes informations de ressources radio sur la base des deuxièmes informations de ressources radio et des quatrièmes informations de ressources radio, dans lequel les cinquièmes informations de ressources radio sont des informations sur une ressource obtenues en soustrayant la ressource hors ligne de la ressource indiquée par les deuxièmes informations de ressources radio, ou les cinquièmes informations de ressources radio sont des informations sur une ressource obtenues en ajustant, sur la base des deuxièmes informations de ressources radio, la ressource dont la relation de connexion change ;
la détermination, par le premier dispositif de gestion (50), de secondes données de configuration de mise à jour du premier cluster RAN sur la base de l'exigence de service, des secondes informations de ressources logiques, et des cinquièmes informations de ressources radio ; et
la mise à jour, par le premier dispositif de gestion (50), des secondes données de configuration de mise à jour vers la ressource indiquée par les cinquièmes informations de ressources radio.

6. Procédé selon l'une quelconque des revendications 1 à 5, dans lequel le premier fichier d'intention comprend également un paramètre de style de gestion de réseau autonome et différentes valeurs du paramètre de style de gestion de réseau autonome indiquent des RanClusters de styles différents, et le procédé comprend également :
l'obtention, par le premier dispositif de gestion (50), d'un fichier de politique correspondant au paramètre de style de gestion de réseau autonome, dans lequel le fichier de politique comprend des données de style de gestion correspondant au paramètre de style de gestion de réseau autonome ; et
la détermination, par le premier dispositif de gestion (50), de données de configuration du premier cluster RAN à créer sur la base de l'exigence de service, de secondes informations de ressources logiques, et de deuxièmes informations de ressources radio comprend :
la détermination, par le premier dispositif de gestion (50), des données de configuration du premier cluster RAN à créer sur la base de l'exigence de service, des secondes informations de ressources logiques, des deuxièmes informations de ressources radio, et des données de style de gestion qui correspondent au paramètre de style de gestion de réseau autonome.

7. Procédé de gestion de réseau, comprenant :
l'obtention, par un second dispositif de gestion (60), d'informations d'exigences de ressource utilisées par un premier dispositif de gestion (50) pour créer un premier cluster RAN ;
la détermination, par le second dispositif de gestion (60) sur la base des informations d'exigences de ressource, de premières informations de ressources radio utilisées par le premier dispositif de gestion (50) pour créer le premier cluster RAN, dans lequel une ressource indiquée par les premières informations de ressources radio sont une ressource radio détectée et gérée par le second dispositif de gestion (60) ; et
l'envoi, par le second dispositif de gestion (60), des premières informations de ressources radio au premier dispositif de gestion (50), dans lequel des deuxièmes informations de ressources radio dans les premières informations de ressources radio sont utilisées par le premier dispositif de gestion (50) pour créer le premier cluster RAN,
dans lequel le procédé est **caractérisé en ce que** le procédé comprend également :
la détection, par le second dispositif de gestion (60), d'une ressource nouvellement mise en ligne ; et
l'envoi, par le second dispositif de gestion (60), de troisièmes informations de ressources radio au premier dispositif de gestion (50), dans lequel les troisièmes informations de ressources radio indiquent la ressource qui est nouvellement mise en ligne, pour indiquer au premier dispositif de gestion (50) de mettre à jour une configuration de réseau sur la base des troisièmes informations de ressources radio,
dans lequel
les premières informations de ressources radio comportent des informations sur des ressources gérées par le second dispositif de gestion (60), et
les deuxièmes informations de ressources radio sont les premières informations de ressources radio ou un sous-ensemble des premières informations de ressources radio.

8. Procédé selon la revendication 7, dans lequel le procédé comprend également :
la détection, par le second dispositif de gestion (60), qu'une ressource est hors ligne ou qu'une relation de connexion d'une ressource change dans les deuxièmes informations de ressources radio ; et
l'envoi, par le second dispositif de gestion (60), de quatrièmes informations de ressources radio au premier dispositif de gestion (50), dans lequel les quatrièmes informations de ressources radio sont utilisées pour indiquer la ressource hors ligne ou la ressource dont la relation de connexion change dans les deuxièmes informations de ressources radio, pour indiquer au premier dispositif de gestion (50) de mettre à jour une configuration de réseau sur la base des quatrièmes informations de ressources radio.

9. Procédé selon la revendication 7, dans lequel le procédé comprend également :
la détermination, par le second dispositif de gestion (60) sur la base de priorités d'au moins deux dispositifs de gestion pour créer une zone d'accès radio, d'une autorisation d'utilisation de la ressource qui est nouvellement mise en ligne ; et
lorsqu'une priorité du premier dispositif de gestion (50) est supérieure à des priorités d'autres dispositifs de gestion pour créer la zone d'accès radio dans les au moins deux dispositifs de gestion pour créer la zone d'accès radio, la détermination du fait que le premier dispositif de gestion (50) obtient l'autorisation d'utilisation de la ressource qui est nouvellement mise en ligne.

10. Procédé selon la revendication 7, dans lequel le procédé comprend également :
la détermination, par le second dispositif de gestion (60), du fait de savoir si des priorités d'au moins deux dispositifs de gestion pour créer une zone d'accès radio sont supérieures à un seuil de priorité ; et
lorsqu'une priorité du premier dispositif de gestion (50) est supérieure au seuil de priorité, la détermination du fait que le premier dispositif de gestion (50) obtient une autorisation d'utilisation de la ressource qui est nouvellement mise en ligne.

11. Procédé selon l'une quelconque des revendications 7 à 10, dans lequel les informations d'exigences de ressource comprennent des informations de position d'une ressource radio requise ; et
la détermination, par le second dispositif de gestion (60) sur la base des informations d'exigences de ressource, de premières informations de ressources radio utilisées par le premier dispositif de gestion (50) pour créer le premier cluster RAN comprend :
la détermination, par le second dispositif de gestion (60) sur la base des informations de position de la ressource radio requise, des premières informations de ressources radio utilisées par le premier dispositif de gestion (50) pour créer le premier cluster RAN.

12. Dispositif de gestion (50), comprenant des unités (501, 502) configurées pour réaliser le procédé selon l'une quelconque des revendications 1 à 6.

13. Dispositif de gestion (60), comprenant des unités (601, 602, 603) configurées pour réaliser le procédé selon l'une quelconque des revendications 7 à 10.
